# EUROPEAN PATENT APPLICATION

(11) **EP 4 651 527 A1**
(43) Date of publication of application: **19.11.2025**
(21) Application number: 24813841.4
(22) Date of filing: 21.03.2024
(51) Int. Cl.: H04W 4/80, H04N 7/14, H04R 25/00

(54) **MANAGEMENT METHOD FOR HEARING AID DEVICE, AND ELECTRONIC DEVICE**

(30) Priority: 29.05.2023 CN 202310621976
(71) Applicant: Honor Device Co., Ltd., Shenzhen, Guangdong 518040 (CN)
(72) Inventor: LI, Zhaoying, Shenzhen, Guangdong 518040 (CN)
(74) Representative: Thun, Clemens
(86) International application number: PCT/CN2024/083087
(87) International publication number: WO 2024/244635

(57) **Abstract**

This application relates to the field of Bluetooth technologies, and provides an assistive listening device management method and an electronic device. The method includes: When Bluetooth is enabled, the electronic device displays a first interface in response to a first operation on a first control in a setting application of the electronic device, where a first Bluetooth device and a second Bluetooth device are displayed on the first interface, the first Bluetooth device is an assistive listening device or a headset, and the second Bluetooth device is another Bluetooth device; and when Bluetooth is enabled, the electronic device displays a second interface in response to a second operation on a second control on an auxiliary function interface of the electronic device, where a third Bluetooth device is displayed on the second interface, the third Bluetooth device is an assistive listening device or a headset, and the second interface does not include another Bluetooth device. In this way, the electronic device may separately manage an assistive listening device and a headset on the second interface, and may manage a full scale of Bluetooth devices on the first interface.

## Description

This application claims priority to Chinese Patent Application No. 202310621976.X, filed with the China National Intellectual Property Administration on May 29, 2023 and entitled "ASSISTIVE LISTENING DEVICE MANAGEMENT METHOD AND ELECTRONIC DEVICE", which is incorporated herein by reference in its entirety.

### TECHNICAL FIELD

Embodiments of this application relate to the field of Bluetooth technologies, and in particular, to an assistive listening device management method and an electronic device.

### BACKGROUND

During a process of using an electronic device, for example, a mobile phone or a tablet computer, a hearing impaired user may need to use an assistive listening device to listen to a sound generated by the electronic device. Before the process, the user needs to establish a Bluetooth connection between the electronic device and the assistive listening device, so that the sound generated by the electronic device can be played from the assistive listening device. In this way, the user can clearly hear, from the assistive listening device, the sound generated by the electronic device.

However, in the prior art, it is difficult for the user to establish the Bluetooth connection between the electronic device and the assistive listening device, resulting in low efficiency of human-computer interaction.

### SUMMARY

This application provides an assistive listening device management method and an electronic device, so that a user can conveniently establish a Bluetooth connection between the electronic device and an assistive listening device and consequently efficiency of human-computer interaction can be improved.

According to a first aspect, this application provides an assistive listening device management method, applied to an electronic device that supports Bluetooth. When Bluetooth is enabled, the electronic device displays a first interface in response to a first operation on a first control in a setting application of the electronic device, where a first Bluetooth device and a second Bluetooth device that are scanned through Bluetooth are displayed on the first interface, the first Bluetooth device is an assistive listening device or a headset, and the second Bluetooth device is a Bluetooth device other than an assistive listening device or a headset. When Bluetooth is enabled, the electronic device displays a second interface in response to a second operation on a second control in an auxiliary function interface of the electronic device, where a third Bluetooth device scanned through Bluetooth is displayed on the second interface, the third Bluetooth device is an assistive listening device or a headset, and the second interface does not include a Bluetooth device other than an assistive listening device or a headset.

It can be seen that based on the solution of this application, the electronic device may separately manage an assistive listening device and a headset on the second interface, and may manage all Bluetooth devices on the first interface. Because the second interface includes only an assistive listening device and a headset, a user can more rapidly complete setting of the assistive listening device on the second interface, thereby improving efficiency of human-computer interaction.

In a possible design, when both the first Bluetooth device and the third Bluetooth device are assistive listening devices, the first interface includes a device name of the first Bluetooth device, first information of the first Bluetooth device, and a first icon of the first Bluetooth device, where the first information is used to indicate that the first Bluetooth device is a device for a left ear or a device for a right ear, and the first icon is an assistive listening device icon; the first interface further includes a name of the second Bluetooth device and a second icon of the second Bluetooth device, where the second icon is an icon corresponding to a device type of the second Bluetooth device; and the second interface includes: a device name of the third Bluetooth device, third information of the third Bluetooth device, and a third icon of the third Bluetooth device, where the third information is used to indicate that the third Bluetooth device is a device for a left ear or a device for a right ear, and the third icon is an assistive listening device icon.

In other words, the electronic device may identify an assistive listening device, and may identify a device for a left ear and a device for a right ear for the assistive listening device. In this way, a more specific indication may be provided for the user, to facilitate an operation performed by the user and further improve the efficiency of human-computer interaction.

In a possible design, the first control is a Bluetooth option on a home interface of the setting application of the electronic device.

In a possible design, the second control is an assistive listening device option on the auxiliary function interface of the electronic device.

In a possible design, the method further includes: The electronic device displays a control center interface, where the control center interface includes a first entry of an assistive listening device; and the electronic device displays a third interface in response to a third operation on the first entry of the assistive listening device, where the third interface includes an assistive listening device and/or a headset, and the third interface does not include a Bluetooth device other than an assistive listening device or a headset.

In other words, the electronic device may further provide a separate entry of an assistive listening device in a control center, thereby providing the user with a quick entry for managing the assistive listening device.

In a possible design, the third interface displays the assistive listening device and/or the headset through a card that pops up on the control center interface. In this way, information of the assistive listening device may be provided on only the control center interface, and there is no need to jump to an interface.

In a possible design, the control center interface further includes a second entry of Bluetooth. After the electronic device displays the control center interface, the method further includes: The electronic device disables Bluetooth in response to a fourth action on the second entry of Bluetooth.

In other words, different functions may be provided for an assistive listening device quick entry and a Bluetooth quick entry in the control center. For example, the third operation and the fourth operation are tap operations. To be specific, information of the assistive listening device and information of the headset may be displayed in response to the tap operation performed by the user on the assistive listening device quick entry, while only Bluetooth may be enabled or disabled in response to the tap operation performed by the user on the Bluetooth quick entry.

In a possible design, the method further includes: The electronic device displays a control center interface, where the control center interface includes a third entry of Bluetooth; the electronic device displays a fourth interface in response to a fifth operation on the third entry of Bluetooth, where the fourth interface includes a fourth entry of an assistive listening device; and the electronic device displays a fifth interface in response to a selection operation on the fourth entry of the assistive listening device, where the fifth interface includes the assistive listening device and/or the headset, and the fifth interface does not include the Bluetooth device other than the assistive listening device or the headset.

In other words, the electronic device may further integrate the assistive listening device quick entry into the Bluetooth quick entry in the control center. In this way, the assistive listening device can be managed through the Bluetooth quick entry.

In a possible design, the fourth interface further includes a fifth entry of Bluetooth. The electronic device displays the first interface in response to a selection operation on the fifth entry of Bluetooth.

In other words, the Bluetooth quick entry in the control center combines functions of providing an entry for managing Bluetooth and providing an entry for managing the assistive listening device, so that a plurality of functions may share the same entry.

In a possible design, after the electronic device displays the control center interface, the method further includes: the electronic device disables Bluetooth in response to a sixth operation on the third entry of Bluetooth.

In other words, when the assistive listening device quick entry is integrated into the Bluetooth quick entry in the control center, the electronic device may implement different functions in response to different operations performed by the user on the Bluetooth quick entry.

In a possible design, when the electronic device is not successfully paired with the assistive listening device and the headset, the Bluetooth devices on the third interface are all unpaired.

In other words, if there is no paired assistive listening device or paired headset, the electronic device provides an available assistive listening device and headset to the user for selection.

In a possible design, when the electronic device is successfully paired with a plurality of assistive listening devices and/or a plurality of headsets, but is not successfully connected to any Bluetooth device among the plurality of assistive listening devices and/or headsets, the third interface includes the plurality of assistive listening devices and/or headsets.

In other words, if there are a plurality of successfully paired assistive listening devices and a plurality of successfully paired headsets, the electronic device provides the plurality of assistive listening devices and the plurality of headsets to the user for selection.

In a possible design, the method further includes: When the electronic device is successfully paired with an assistive listening device or a headset, the electronic device establishes a connection to the assistive listening device or the headset in response to the third operation on the first entry of the assistive listening device.

In other words, if there is a successfully paired assistive listening device or a successfully paired headset, the electronic device directly establishes a connection to the assistive listening device or the headset, to reduce an operation performed by the user.

In a possible design, the electronic device is not successfully paired with the third Bluetooth device. It can be seen that even if the electronic device is not successfully paired with the assistive listening device, the electronic device may still identify the assistive listening device.

In addition, after the electronic device displays the second interface, the method further includes: In response to a pairing operation on the third Bluetooth device, the electronic device performs pairing with the third Bluetooth device and establishes a connection to the third Bluetooth device.

In a possible design, the second interface further includes a fourth Bluetooth device that is scanned by the electronic device but is not successfully paired with the electronic device, and the fourth Bluetooth device and the third Bluetooth device are a pair of assistive listening devices. After the electronic device performs pairing with the third Bluetooth device and establishes a connection to the third Bluetooth device, the method further includes: The electronic device displays a first prompt, where the first prompt is used to prompt for pairing with the fourth Bluetooth device; and in response to a pairing confirmation operation performed by the user on the first prompt, the electronic device performs pairing with the fourth Bluetooth device and establishes a connection to the fourth Bluetooth device.

In other words, if a scanned assistive listening device includes another assistive listening device that forms a pair with a paired and connected assistive listening device, the electronic device may actively prompt the user with pairing with and connection to the another assistive listening device, thereby establishing a connection to a pair of assistive listening devices.

In a possible design, after the electronic device is paired with and connected to the third Bluetooth device, a third control in the electronic device is not operable. The third control is configured to trigger the electronic device to adjust sound equalization of left and right sound channels. This avoids confusion in volume adjustment after the assistive listening device is connected.

In a possible design, the first interface includes a first card and a second card, the first card includes the first Bluetooth device, and the second card includes the second Bluetooth device. In this way, even on the Bluetooth management interface, the assistive listening device can be displayed on a separate card, making it convenient for the user to use.

In a possible design, the first card is located above the second card on the first interface. In this way, the assistive listening device can be displayed at a more prominent position.

According to a second aspect, this application further provides an electronic device, including: a display, a memory, and one or more processors, where the memory is coupled to the processor; the memory stores a computer program code, the computer program code includes computer instructions, and when the computer instructions are executed by the processor, the electronic device is enabled to perform the method according to the first aspect and any one of the possible designs of the first aspect.

According to a third aspect, this application further provides a chip system. The chip system is used in an electronic device including a display, a processor, and a memory. The chip system includes one or more interface circuits and one or more processors. The interface circuit is interconnected to the processor through a line. The interface circuit is configured to: receive a signal from the memory and send a signal to the processor. The signal includes computer instructions stored in the memory. When the processor executes the computer instructions, the electronic device is enabled to perform the method according to the first aspect and any one of the possible designs of the first aspect.

According to a fourth aspect, this application further provides a computer-readable storage medium, including computer instructions. When the computer instructions are run on an electronic device, the electronic device is enabled to perform the method according to the first aspect and any one of the possible designs of the first aspect.

According to a fifth aspect, this application provides a computer program product. When the computer program product is run on a computer, the computer is enabled to perform the method according to the first aspect and any one of the possible designs of the first aspect.

It may be understood that, for beneficial effects that can be achieved by the electronic device, the chip system, the computer storage medium, and the computer program product provided above, refer to the beneficial effects in the first aspect, the second aspect, and any one of the possible designs of the first aspect and the second aspect. Details are not described herein again.

### BRIEF DESCRIPTION OF DRAWINGS

FIG. 1 is a diagram of an application scenario according to an embodiment of this application;
FIG. 2 is a diagram of a hardware structure of a mobile phone according to an embodiment of this application;
FIG. 3 is an interface diagram of an assistive listening device management interface according to an embodiment of this application;
FIG. 4A to FIG. 4C are an interface interaction diagram for entering an assistive listening device management interface according to an embodiment of this application;
FIG. 5A to FIG. 5C are an interface interaction diagram for viewing help from an assistive listening device management interface according to an embodiment of this application;
FIG. 6A and FIG. 6B are a first interface diagram of a Bluetooth management interface according to an embodiment of this application;
FIG. 7A to FIG. 7C are a second interface diagram of a Bluetooth management interface according to an embodiment of this application;
FIG. 8A to FIG. 8C are an interface interaction diagram for viewing help from a Bluetooth management interface according to an embodiment of this application;
FIG. 9A to FIG. 9C are a first interface interaction diagram of pairing and connection according to an embodiment of this application;
FIG. 10A to FIG. 10C are a second interface interaction diagram of pairing and connection according to an embodiment of this application;
FIG. 11A and FIG. 11B are a first interface interaction diagram for entering an assistive listening device quick entry according to an embodiment of this application;
FIG. 12A and FIG. 12B are a first interface interaction diagram for managing an assistive listening device from an assistive listening device quick entry according to an embodiment of this application;
FIG. 13A to FIG. 13D are a second interface interaction diagram for managing an assistive listening device from an assistive listening device quick entry according to an embodiment of this application;
FIG. 14A to FIG. 14C are a third interface interaction diagram for managing an assistive listening device from an assistive listening device quick entry according to an embodiment of this application;
FIG. 15A to FIG. 15D are a fourth interface interaction diagram for managing an assistive listening device from an assistive listening device quick entry according to an embodiment of this application;
FIG. 16A to FIG. 16C are a fifth interface interaction diagram for managing an assistive listening device from an assistive listening device quick entry according to an embodiment of this application;
FIG. 17A and FIG. 17B are a sixth interface interaction diagram for managing an assistive listening device from an assistive listening device quick entry according to an embodiment of this application;
FIG. 18A to FIG. 18D are a second interface interaction diagram for entering an assistive listening device quick entry according to an embodiment of this application;
FIG. 19A and FIG. 19B are a seventh interface interaction diagram for managing an assistive listening device from an assistive listening device quick entry according to an embodiment of this application;
FIG. 20A to FIG. 20D are a first interface interaction diagram for adjusting a volume of a successfully connected assistive listening device according to an embodiment of this application;
FIG. 21A to FIG. 21D are a second interface interaction diagram for adjusting a volume of a successfully connected assistive listening device according to an embodiment of this application; and
FIG. 22A to FIG. 22D are a diagram of a changing process of a display state of an audio equalization control according to an embodiment of this application.

### DESCRIPTION OF EMBODIMENTS

The following describes technical solutions of embodiments of this application with reference to the accompanying drawings in embodiments of this application. In descriptions of embodiments of this application, terms used in the following embodiments are merely intended to describe particular embodiments, but are not intended to limit this application. As used in the specification and the appended claims of this application, the singular expressions "a/an", "said", "the foregoing", "the" and "this" are intended to include such expressions as "one or more", unless otherwise clearly indicated in the context. It should be further understood that in the following embodiments of this application, "at least one" and "one or more" refer to one, two, or more (including two). The term "and/or" is used for describing an association relationship between associated objects, and indicates that three relationships may be present. For example, A and/or B may indicate the presence of the following three conditions: only A, both A and B, and only B, where A and B may be singular or plural. The character "/" usually indicates an "or" relationship between the associated objects.

Reference like "one embodiment" or "some embodiments" described in this specification means that a particular characteristic, structure, or feature described with reference to one or more embodiments is included in the one or more embodiments of this application. Therefore, statements "in one embodiment", "in some embodiments", "in some other embodiments", "in other embodiments", and the like appear in different places in this specification do not necessarily refer to the same embodiment, but mean "one or more but not all embodiments", unless otherwise specified in other ways. The terms "include", "comprise", "have", and variations thereof all mean "including but not limited to", unless otherwise specified. The term "connection" includes a direct connection and an indirect connection, unless otherwise specified. The terms "first" and "second" are used for descriptive purposes only and should not be construed as indicating or implying relative importance or implicitly indicating a quantity of technical features indicated.

In embodiments of this application, the terms such as "example" or "for example" are used to represent giving an example, an illustration, or a description. Any embodiment or design scheme described by using "example" or "for example" in embodiments of this application should not be explained as being more preferred or having more advantages than another embodiment or design scheme. Exactly, use of the words such as "example" or "for example" is intended to present a related concept in a specific manner.

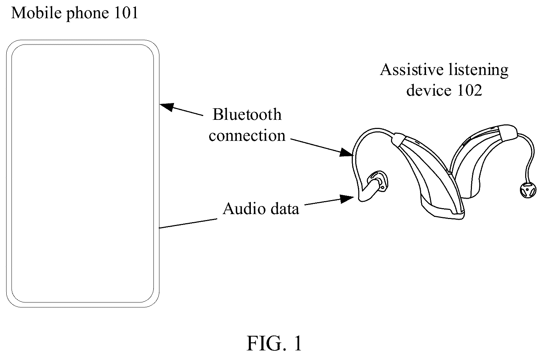

An assistive listening device management method provided in embodiments of this application may be applied to a scenario in which an assistive listening device is used to play an audio from an electronic device, for example, a mobile phone or a tablet computer. For example, the electronic device is a mobile phone 101 shown in FIG. 1, and the assistive listening device is an assistive listening device 102 shown in FIG. 1. During a process of using the mobile phone 101, a hearing impaired user may establish a Bluetooth connection between the mobile phone 101 and the assistive listening device 102, and then use the assistive listening device 102 to play a sound generated by the mobile phone 101. In this way, the user can clearly hear the sound generated by the mobile phone 101.

The assistive listening device management method provided in embodiments of this application is applied to the foregoing scenario. This enables the user to conveniently establish a Bluetooth connection between the electronic device and the assistive listening device, thereby improving efficiency of human-computer interaction.

Specifically, after scanning available devices, according to a Bluetooth technology, the electronic device may identify an assistive listening device in an available device list, and identify that the assistive listening device is an assistive listening device for a left ear (referred to as a left ear device for short) or an assistive listening device for a right ear (referred to as a right ear device for short). The electronic device may perform pairing with the assistive listening device and establish a connection to the assistive listening device in response to a pairing operation performed by the user on the assistive listening device in the available device list.

It can be seen that, according to embodiments of this application, the user may clearly distinguish between the assistive listening device, the left ear device, and the right ear device based on identifications in the available device list. In this way, the user can accurately select the assistive listening device for pairing and connection, thereby improving the efficiency of human-computer interaction.

For example, the electronic device may be a device that may provide an audio, for example, a mobile phone, a tablet computer, a desktop computer, a laptop computer, a handheld computer, a notebook computer, an ultra-mobile personal computer (ultra-mobile personal computer, UMPC), a netbook, a cellular phone, a personal digital assistant (personal digital assistant, PDA), or an augmented reality (augmented reality, AR)/virtual reality (virtual reality, VR) device. A specific form of the electronic device is not specially limited in embodiments of this application.

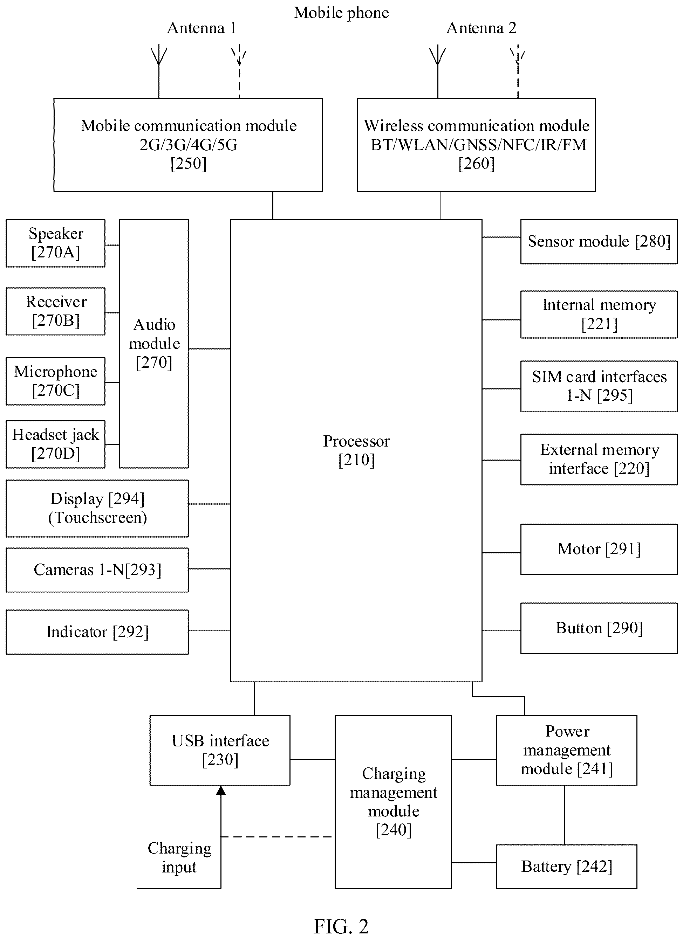

FIG. 2 is a diagram of a hardware structure of an electronic device according to an embodiment of this application. For example, the electronic device is a mobile phone. As shown in FIG. 2, the electronic device may include a processor 210, an external memory interface 220, an internal memory 221, a universal serial bus (universal serial bus, USB) interface 230, a charging management module 240, a power management module 241, a battery 242, an antenna 1, an antenna 2, a mobile communication module 250, a wireless communication module 260, an audio module 270, a speaker 270A, a receiver 270B, a microphone 270C, a headset jack 270D, a sensor module 280, a button 290, a motor 291, an indicator 292, a camera 293, a display 294, a subscriber identification module (subscriber identification module, SIM) card interface 295, and the like.

The processor 210 may include one or more processing units. For example, the processor 210 may include an application processor (application processor, AP), a modem processor, a graphics processing unit (graphics processing unit, GPU), an image signal processor (image signal processor, ISP), a controller, a video encoder and decoder, a digital signal processor (digital signal processor, DSP), a baseband processor, and/or a neural-network processing unit (neural-network processing unit, NPU). Different processing units may be separate devices, or may be integrated into one or more processors.

The processor 210 may generate an operation control signal based on an instruction operation code and a timing signal, to implement control on instruction fetching and execution.

The charging management module 240 is configured to receive a charging input from a charger. The charger may be a wireless charger or a wired charger. In some embodiments of wired charging, the charging management module 240 may receive a charging input of a wired charger through the USB interface 230. In some embodiments of wireless charging, the charging management module 240 may receive a wireless charging input through a wireless charging coil of the electronic device. The charging management module 240 may further supply power to the electronic device through a power management module 241 while charging the battery 242.

The power management module 241 is configured to connect to the battery 242, the charging management module 240, and the processor 210. The power management module 241 receives an input from the battery 242 and/or the charging management module 240, and supplies power to the processor 210, the internal memory 221, the display 294, the camera 293, the wireless communication module 260, and the like. The power management module 241 may be further configured to monitor parameters such as a battery capacity, a quantity of battery cycles, and a battery health status (electric leakage or impedance). In some other embodiments, the power management module 241 may alternatively be provided in the processor 210. In other embodiments, the power management module 241 and the charging management module 240 may alternatively be arranged in a same device.

A wireless communication function of the electronic device may be implemented through the antenna 1, the antenna 2, the mobile communication module 250, the wireless communication module 260, a modem processor, a baseband processor, and the like.

The wireless communication module 260 may provide a solution to wireless communication applied to the electronic device, for example, a wireless local area network (wireless local area network, WLAN) (for example, a wireless fidelity (wireless fidelity, Wi-Fi) network), Bluetooth (Bluetooth, BT), Bluetooth low energy (Bluetooth low energy, BLE), an ultra wide band (ultra wide band, UWB), a global navigation satellite system (global navigation satellite system, GNSS), frequency modulation (frequency modulation, FM), near field communication (near field communication, NFC), or an infrared (infrared, IR) technology. The wireless communication module 260 may be one or more devices to which at least one communication processing module is integrated. The wireless communication module 260 receives an electromagnetic wave through the antenna 2, performs frequency modulation and filtering on the electromagnetic wave signal, and sends the processed signal to the processor 210. The wireless communication module 260 may further receive a to-be-sent signal from the processor 210, perform frequency modulation and amplification on the to-be-sent signal, and convert the to-be-sent signal into an electromagnetic wave through the antenna 2 for radiation.

In this application, communication between the electronic device and the assistive listening device is implemented through Bluetooth communication, for example, audio data transmission.

The electronic device may implement a display function through the GPU, the display screen 294, the application processor, and the like. The GPU is a microprocessor for image processing, and is connected to the display screen 294 and the application processor. The GPU is configured to perform mathematical and geometric computing for graphics rendering. The processor 210 may include one or more GPUs, and is configured to execute program instructions to generate or change display information.

The electronic device may implement a photographing function through a camera module 293, the ISP, the video encoder and decoder, the GPU, the display 294, the application processor AP, the neural-network processing unit NPU, and the like.

The external memory interface 220 may be configured to be connected to an external memory card, for example, a Micro SD card, to extend a storage capability of the electronic device. The internal memory 221 may be configured to store a computer-executable program code, where the executable program code includes instructions. The built-in memory 221 may include a program storage area and a data storage area. The program storage area may store an operating system, an application required by at least one function (for example, a sound playback function or an image display function), and the like. The data storage area may store data (for example, audio data or an address book) and the like created when the electronic device is used.

The electronic device may implement, through the audio module 270, the speaker 270A, the receiver 270B, the microphone 270C, the headset jack 270D, the application processor, and the like, an audio function, for example, music playing or sound recording.

The button 290 may include a power button, a volume button, and the like. The button 290 may be a mechanical button, or may be a touch button. The electronic device may receive a button input, and generate a button signal input related to user setting and function control of the electronic device.

The motor 291 may generate a vibration prompt. The motor 291 may be configured to provide an incoming call vibration prompt, or may be configured to provide touch vibration feedback. For example, touch operations performed on different applications (such as photographing and audio playing) may correspond to different vibration feedback effects. The indicator 292 may be an indicator light, and may be configured to indicate a charging state and a power change, or may be configured to indicate a message, a missed call, a notification, and the like.

The SIM card interface 295 is configured to be connected to a SIM card. The SIM card may be inserted into the SIM card interface 295 or removed from the SIM card interface 295, so that the SIM card is in contact with or separated from the electronic device.

The assistive listening device management method provided in embodiments of this application may be implemented in an electronic device having the foregoing hardware structure. The following describes in detail embodiments of this application by using an example in which the electronic device is a mobile phone with reference to the accompanying drawings.

After Bluetooth is enabled, the mobile phone may scan available devices within a Bluetooth communication range, identify an assistive listening device in the available devices, and further identify a left ear device and/or a right ear device for the assistive listening device.

For example, an Android ^{™} mobile phone may identify whether an available device is an assistive listening device by obtaining a protocol supported by the available device. If the protocol supported by the available device is an audio streaming for hearing aid (Audio Streaming for Hearing Aid, ASHA) protocol, the available device is the assistive listening device. Usually, an assistive listening device that can communicate with the Android ^{™} mobile phone supports the ASHA protocol. Therefore, the mobile phone may determine whether an available device is an assistive listening device according to whether the available device supports the ASHA protocol. However, during actual implementation, this is not limited thereto.

A preset identification is configured inside the assistive listening device to indicate whether the assistive listening device is a left ear device or a right ear device. For example, if the preset identification is 1, it indicates that the assistive listening device is a left ear device; or if the preset identification is 0, it indicates that the assistive listening device is a right ear device. Therefore, the mobile phone may identify, by obtaining the preset identification in the available device, whether the assistive listening device is a left ear device or a right ear device.

After identifying the assistive listening device and identifying the left ear device and/or the right ear device for the assistive listening device, the mobile phone may identify the assistive listening device and the left ear device and/or the right ear device in the available device list. An icon for identifying the assistive listening device may be referred to as an assistive listening device icon.

In some embodiments, an assistive listening device management interface (a second interface) is provided in the mobile phone. The assistive listening device management interface includes an available assistive listening device and an available headset. In other words, the available device list includes only an assistive listening device and a headset (where any assistive listening device or headset may be referred to as a third Bluetooth device), and does not include another Bluetooth device, that is, does not include a Bluetooth device other than an assistive listening device or a headset. It should be understood that some headsets have an assistive listening function. Therefore, a headset may also be displayed in the available device list on the assistive listening device management interface. In this way, the assistive listening device may be specifically managed on the assistive listening device management interface.

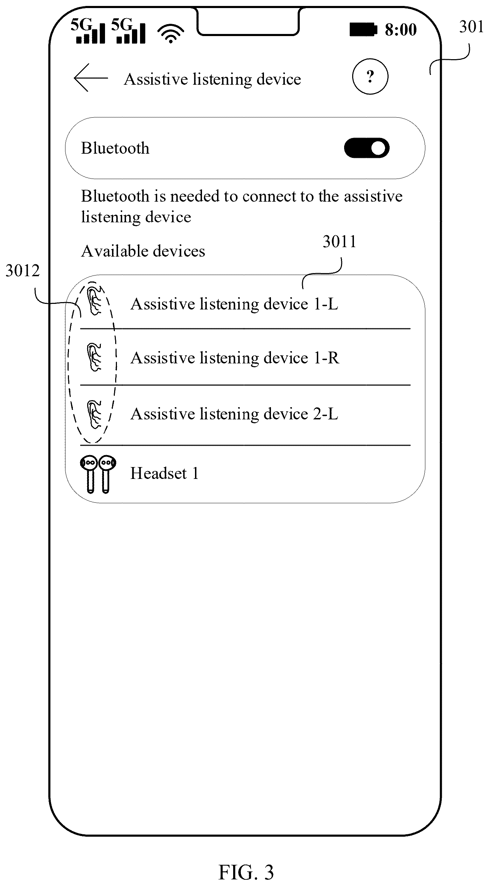

For example, the assistive listening device management interface is an interface 301 shown in FIG. 3, and the interface 301 includes an assistive listening device available device list 3011. The available device list 3011 includes an "ear" icon 3012, and the "ear" icon 3012 is used to identify a device type of a corresponding available device as an assistive listening device. That is, an assistive listening device icon is the "ear" icon 3012. The available device list 3011 further includes device names of the available devices, such as an assistive listening device 1-L, an assistive listening device 1-R, an assistive listening device 2-L, and a headset 1. In the device names, L is used to identify a corresponding assistive listening device as a left ear device, and R is used to identify a corresponding assistive listening device as a right ear device.

It should be noted that the identifications shown in FIG. 3 for identifying an available device, a left ear device, and a right ear device are only exemplary. During actual implementation, this is not limited thereto. For example, "left" may alternatively be used to identify a left ear device, and "right" may alternatively be used to identify a right ear device. For another example, a "horn" icon may alternatively be used to identify an assistive listening device.

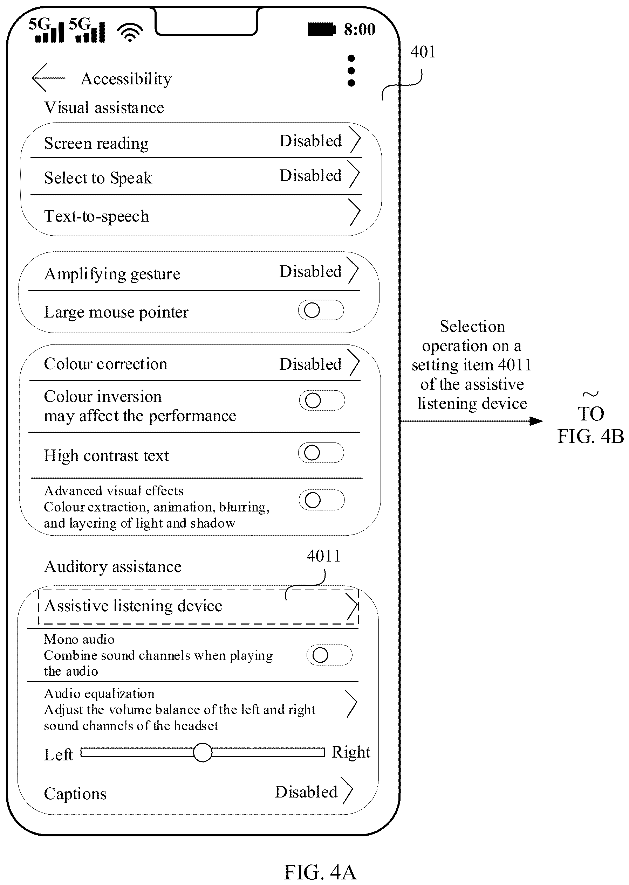

In a specific implementation, settings of the mobile phone include an assistive listening device setting item (a second control), and the assistive listening device setting item may also be referred to as an assistive listening device option for short. The mobile phone may display the assistive listening device management interface in response to a selection operation (a second operation) performed by the user on the assistive listening device setting item. For example, the mobile phone may display an interface 401 shown in FIG. 4A. The interface 401 is an accessibility setting item interface in the settings of the mobile phone. The accessibility setting item interface includes various types of settings such as visual assistance and auditory assistance. The auditory assistance further includes an assistive listening device setting item 4011.

Because the assistive listening device is also a Bluetooth device, the mobile phone can discover an available assistive listening device and be paired with and connected to the assistive listening device only when Bluetooth is enabled. Based on this, in response to the selection operation performed by the user on the assistive listening device setting item, the mobile phone needs to display the assistive listening device management interface according to whether Bluetooth is enabled.

When the mobile phone does not enable Bluetooth, the mobile phone may display a Bluetooth switch in response to the selection operation performed by the user on the assistive listening device setting item. In this case, the Bluetooth switch is in a disabled state, which indicates that Bluetooth is not enabled. The mobile phone displays the assistive listening device management interface in response to an enabling operation performed by the user on the Bluetooth switch.

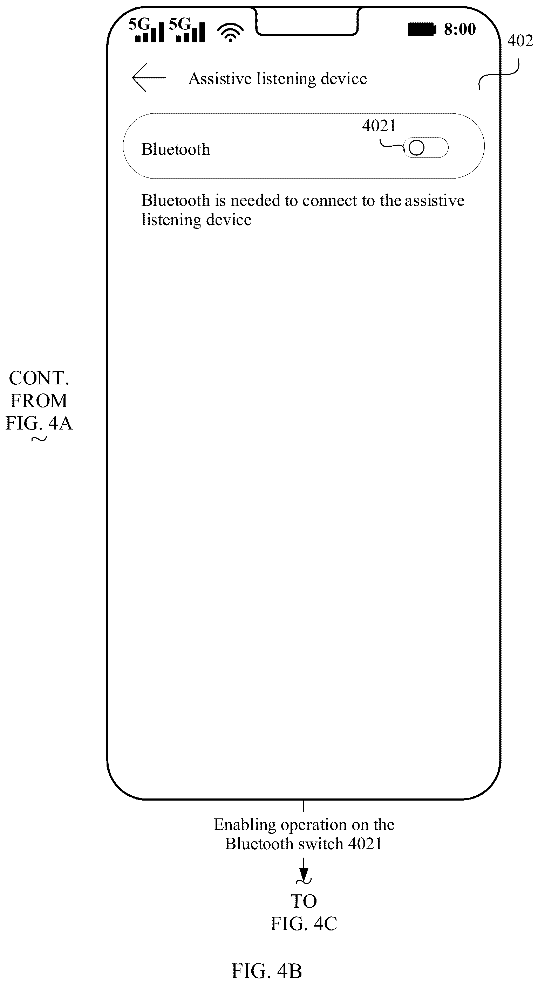

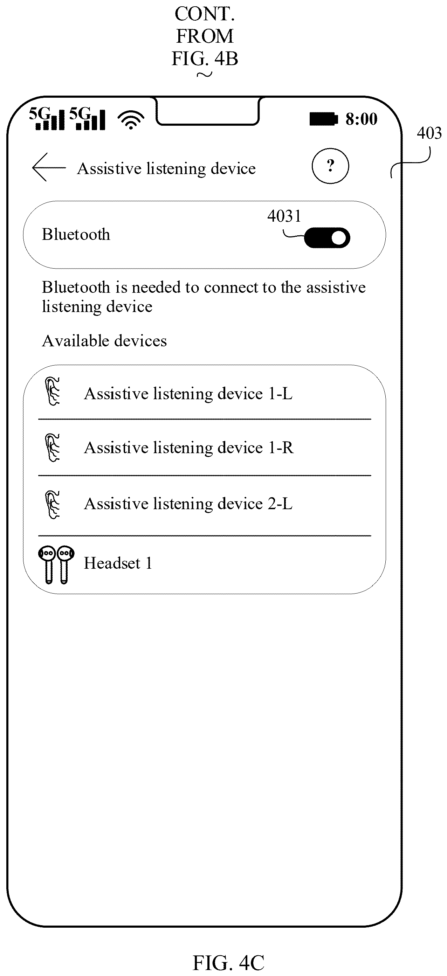

For example, when the mobile phone does not enable Bluetooth, the mobile phone may display an interface 402 shown in FIG. 4B in response to a selection operation performed by the user on the assistive listening device setting item 4011 on the interface 401. The interface 402 includes a Bluetooth switch 4021 that is in a disabled state. The mobile phone may display an interface 403 shown in FIG. 4C in response to an enabling operation performed by the user on the Bluetooth switch 4021 on the interface 402. The interface 403 is an assistive listening device management interface. The interface 403 includes a Bluetooth switch 4031 that is in an enabled state, and the Bluetooth switch 4031 is configured to indicate that Bluetooth has been enabled currently.

Alternatively, when the mobile phone enables Bluetooth, the mobile phone may display the assistive listening device management interface in response to the selection operation performed by the user on the assistive listening device setting item.

For example, when the mobile phone enables Bluetooth, the mobile phone may display the interface 403 shown in FIG. 4C in response to a selection operation performed by the user on the assistive listening device setting item 4011 on the interface 401.

Further, the assistive listening device management interface further includes a help control, and the help control is configured to trigger the mobile phone to display common questions encountered during a process of using the assistive listening device. The mobile phone may display a plurality of common questions or a plurality of common questions and answers to the questions in response to an operation (for example, a tap operation or a long press operation) performed by the user on the help control on the assistive listening device management interface.

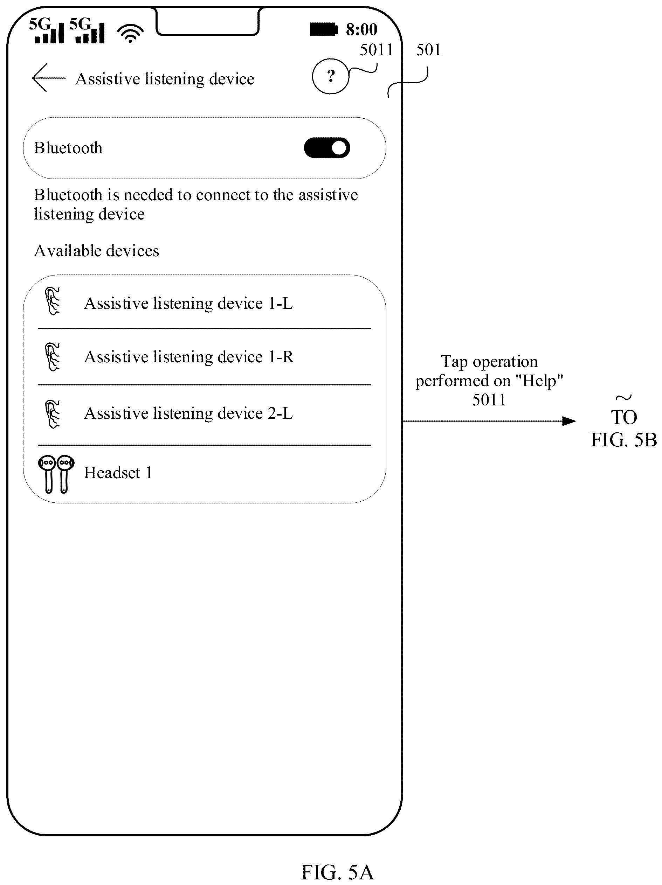

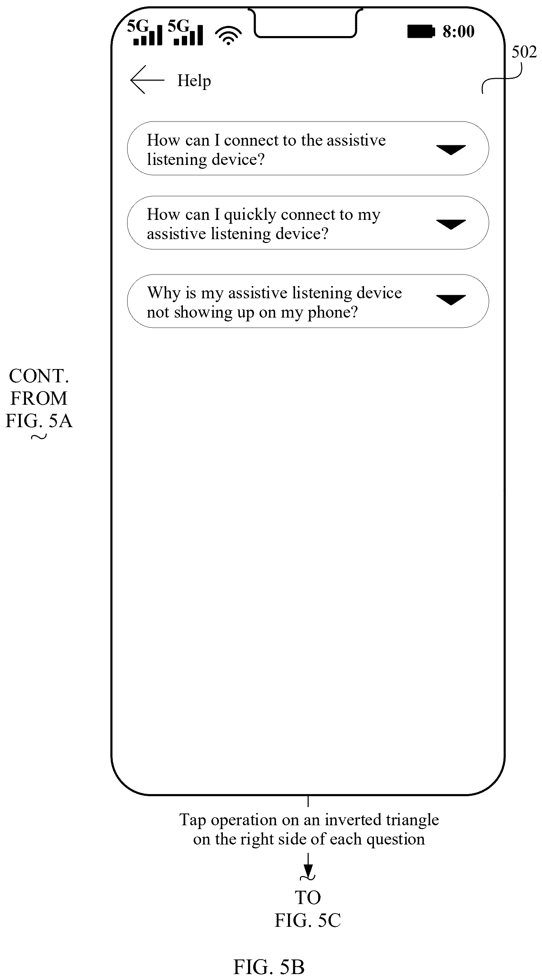

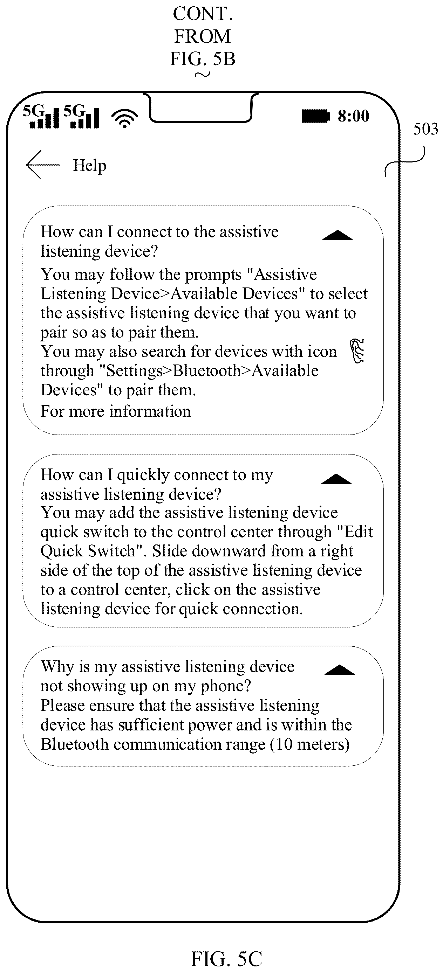

For example, the assistive listening device management interface is an interface 501 shown in FIG. 5A, and the interface 501 includes "Help" 5011. "Help" 5011 is used to trigger the mobile phone to answer common questions encountered during the process of using the assistive listening device. That is, the help control is "Help" 5011 on the interface 501. The mobile phone may display the interface 502 shown in FIG. 5B in response to a tap operation performed by the user on "Help" 5011 on the interface 501, and the interface 502 includes a plurality of common questions, such as "How can I connect to an assistive listening device?", "How can I quickly connect to my assistive listening device?", and "Why is my assistive listening device not showing up on my phone?". The mobile phone may display an answer to a corresponding question in response to a viewing operation performed by the user on any of the questions, for example, a tap operation on an inverted triangle on the right side of each question on the interface 502. For example, the mobile phone may display an interface 503 shown in FIG. 5C after receiving viewing operations performed by the user on the three questions on the interface 502, and the interface 503 includes answers to the three questions.

When the assistive listening device management interface is provided in the mobile phone, the mobile phone may further provide a Bluetooth management interface (a first interface) to manage all Bluetooth devices.

In some embodiments, a Bluetooth device management interface is provided in the mobile phone. The Bluetooth device management interface includes a full scale of available devices, such as an available assistive listening device, a headset, a mobile phone, a tablet computer, a laptop computer, and a wearable device. In other words, the available device list not only includes an assistive listening device and a headset (where any assistive listening device or headset may be referred to as a first Bluetooth device), but also includes a Bluetooth device (which may be referred to as a second Bluetooth device) other than an assistive listening device or a headset. An assistive listening device, a left ear device, and a right ear device are also identified on the Bluetooth device management interface, so that the user accurately selects, on the Bluetooth device management interface, the assistive listening device to be paired with and connected to the mobile phone.

In a specific implementation, in the available device list on the Bluetooth device management interface, a full scale of available devices are displayed on a same card.

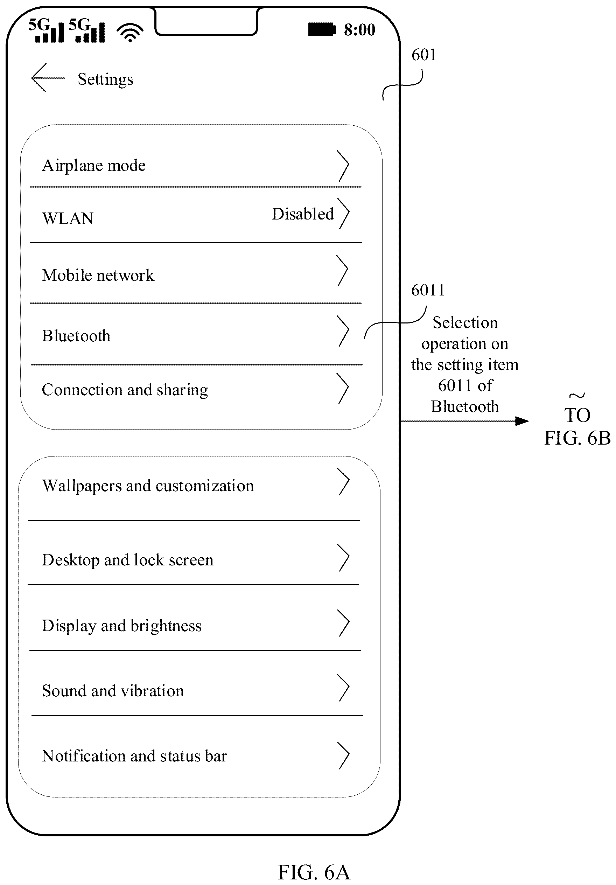

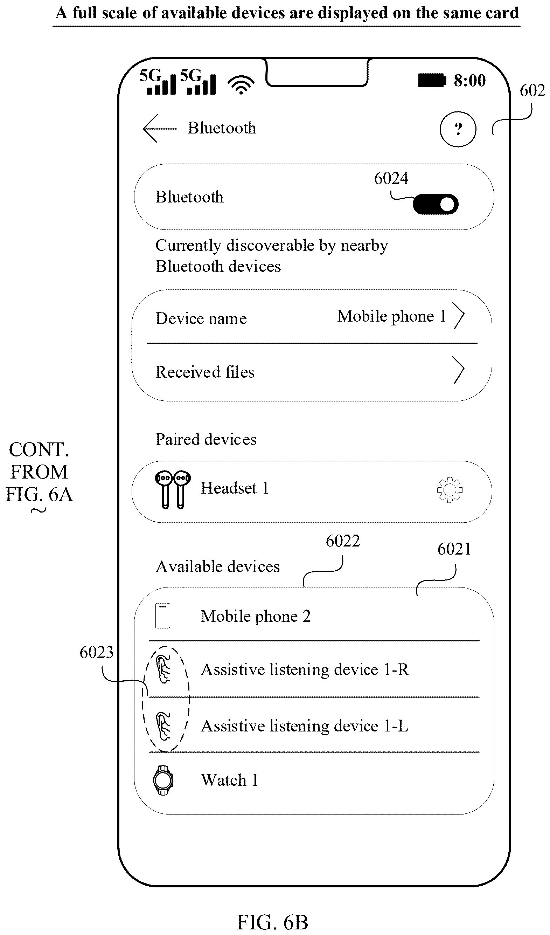

For example, the mobile phone may display an interface 601 shown in FIG. 6A. The interface 601 is a setting application interface. The interface 601 includes a Bluetooth setting item 6011 (a first control), and the Bluetooth setting item may also be referred to as a Bluetooth option for short. The mobile phone may display an interface 602 shown in FIG. 6B in response to a selection operation (a first operation) performed by the user on the Bluetooth setting item 6011 on the interface 601, and the interface 602 is the Bluetooth device management interface. The interface 602 includes an available device list 6021. The available device list 6021 includes a full scale of available devices, such as a mobile phone, an assistive listening device, and a watch, but is not limited to an assistive listening device and a headset. The available devices in the available device list 6021 are all displayed on a same card 6022. Similarly, in the available device list 6021, for an assistive listening device, the mobile phone displays an "ear" icon 6023, and the "ear" icon 6023 is used to identify the available device as an assistive listening device. In addition, in device names of assistive listening devices, L is used to identify a corresponding assistive listening device as a left ear device, and R is used to identify a corresponding assistive listening device as a right ear device.

It should be understood that the mobile phone scans available devices and display a corresponding available device in the available device list only when Bluetooth is enabled, and the mobile phone neither scans available devices nor displays a corresponding available device in the available device list when Bluetooth is disabled. Therefore, the interface 602 shown in FIG. 6B includes a Bluetooth switch 6024 that is in an enabled state, and the Bluetooth switch 6024 is configured to indicate that Bluetooth has been enabled. In this case, the mobile phone scans and displays the available device list 6021.

In this implementation, in the available device list on the Bluetooth device management interface, only an assistive listening device, a left ear device, and a right ear device are identified, and an assistive listening device is not separately displayed in the available device list. Therefore, during actual implementation, the mobile phone may specifically manage an assistive listening device on the foregoing assistive listening device management interface, and may manage all Bluetooth devices in this implementation.

In another specific implementation, in the available device list on the Bluetooth device management interface, an assistive listening device in a full scale of available devices may be displayed on a separate card (a first card), and the assistive listening device may be displayed at a more prominent position of the full scale of available devices. In this way, the assistive listening device may be displayed in a highlighted manner.

Because the user usually needs to use only one pair of assistive listening devices, namely, a left ear device and a right ear device, the mobile phone may display the two assistive listening devices on the separate card on the Bluetooth device management interface. If there are more assistive listening devices, the mobile phone hides the assistive listening devices. In this way, space occupied on the interface can be reduced while daily needs of the user are met.

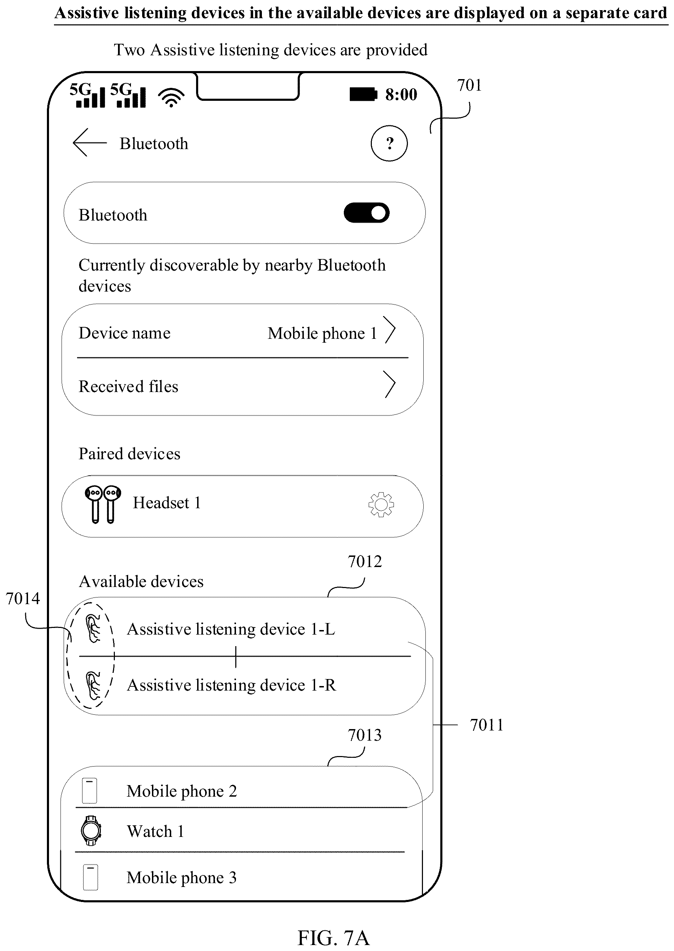

For example, when there are two assistive listening devices, the mobile phone may display an interface 701 shown in FIG. 7A in response to a selection operation performed by the user on the Bluetooth setting item in the settings of the mobile phone, and the interface 701 is the Bluetooth device management interface. The interface 701 includes an available device list 7011. The available device list 7011 is displayed on two cards, namely, a card 7012 (a first card) and a card 7013 (a second card). The card 7012 includes an assistive listening device, and the card 7013 includes an available device other than an assistive listening device. On the card 7012, an "ear" icon 7014 is used to identify an assistive listening device. In addition, in device names of assistive listening devices, L is used to identify a corresponding assistive listening device as a left ear device, and R is used to identify a corresponding assistive listening device as a right ear device. In addition, the card 7012 is located in front of the card 7013, so that the assistive listening device is displayed at a more prominent position.

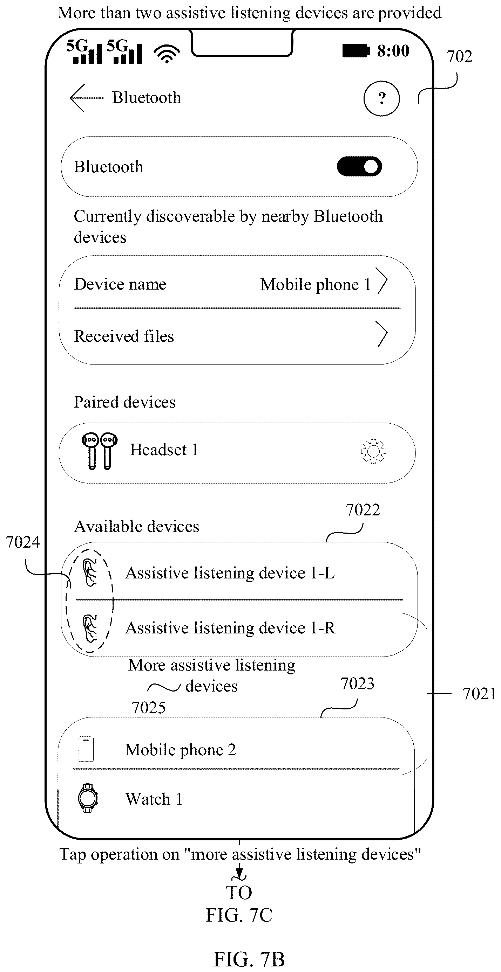

For another example, when there are three assistive listening devices, the mobile phone may display an interface 702 shown in FIG. 7B in response to a selection operation performed by the user on the Bluetooth setting item in the settings of the mobile phone, and the interface 702 is the Bluetooth device management interface. The interface 702 includes an available device list 7021. The available device list 7021 is displayed on two cards, namely, a card 7022 and a card 7023. The card 7022 includes an assistive listening device, and the card 7023 includes an available device other than an assistive listening device. On the card 7022, an "ear" icon 7024 is used to identify an assistive listening device. In addition, in device names of assistive listening devices, L is used to identify a corresponding assistive listening device as a left ear device, and R is used to identify a corresponding assistive listening device as a right ear device. In addition, the card 7022 is located in front of the card 7023, so that the assistive listening device is displayed at a more prominent position.

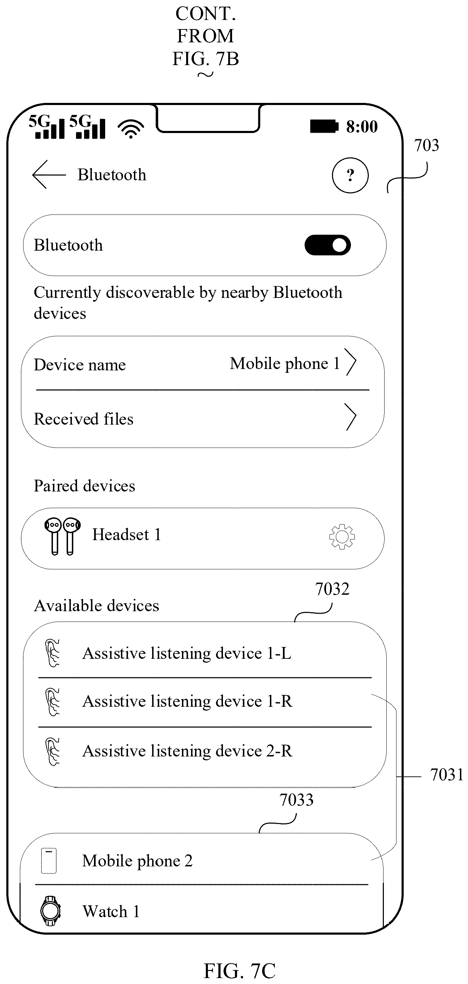

Moreover, only two assistive listening devices, namely, an assistive listening device 1-L and an assistive listening device 1-R, are displayed on the card 7022. Below the card 7022, a prompt for "More assistive listening devices" 7025 is displayed to indicate presence of hidden assistive listening devices. The mobile phone may display an interface 703 shown in FIG. 7C in response to a tap operation performed by the user on "More assistive listening devices" 7025. The interface 703 includes an available device list 7031, and the available device list 7031 is displayed on a card 7032 and a card 7033. Different from the card 7022 on the interface 702, the card 7032 on the interface 703 displays all three assistive listening devices: an assistive listening device 1-L, an assistive listening device 1-R, and an assistive listening device 2-R, so that more assistive listening devices can be displayed. The assistive listening devices may be all of the hidden assistive listening devices. Alternatively, there are too many hidden assistive listening devices. The assistive listening devices may be a part of the hidden assistive listening devices.

In this implementation, in the available device list on the Bluetooth device management interface, not only an assistive listening device, a left ear device, and a right ear device are identified, but also an assistive listening device is displayed on the separate card. In other words, the assistive listening device is specifically managed on the Bluetooth device management interface. This achieves an effect that is the same as the effect of specifically managing an assistive listening device on the foregoing assistive listening device management interface. Therefore, during actual implementation, the mobile phone may specifically manage an assistive listening device and manage the full scale of available devices only on the Bluetooth device management interface.

Further, the Bluetooth device management interface further includes a help control, and the help control is configured to trigger the mobile phone to display connection types of various Bluetooth devices. The mobile phone may display options for a plurality of Bluetooth devices or options for a plurality of Bluetooth devices and connection types of the Bluetooth devices in response to an operation (for example, a tap operation or a long press operation) performed by the user on the help control on the Bluetooth device management interface.

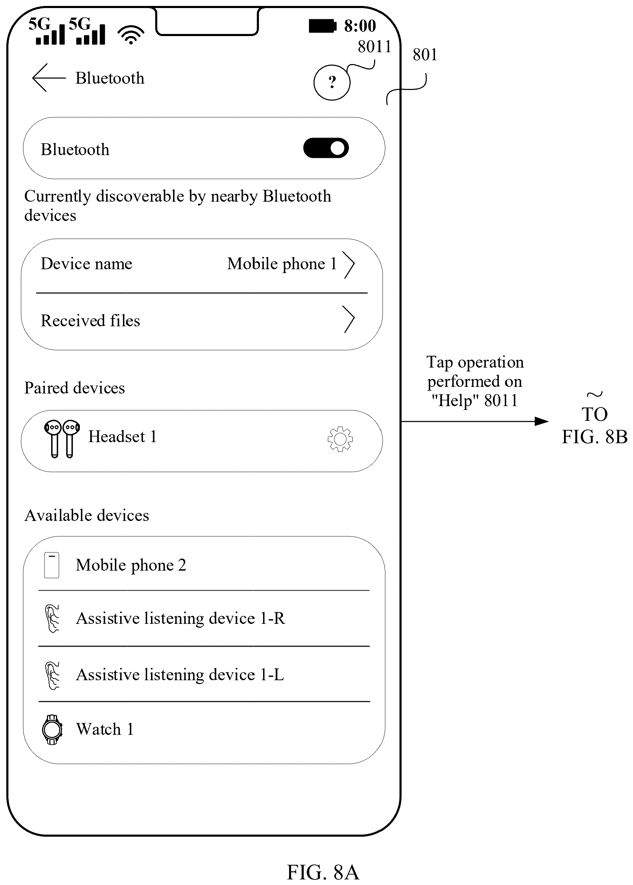

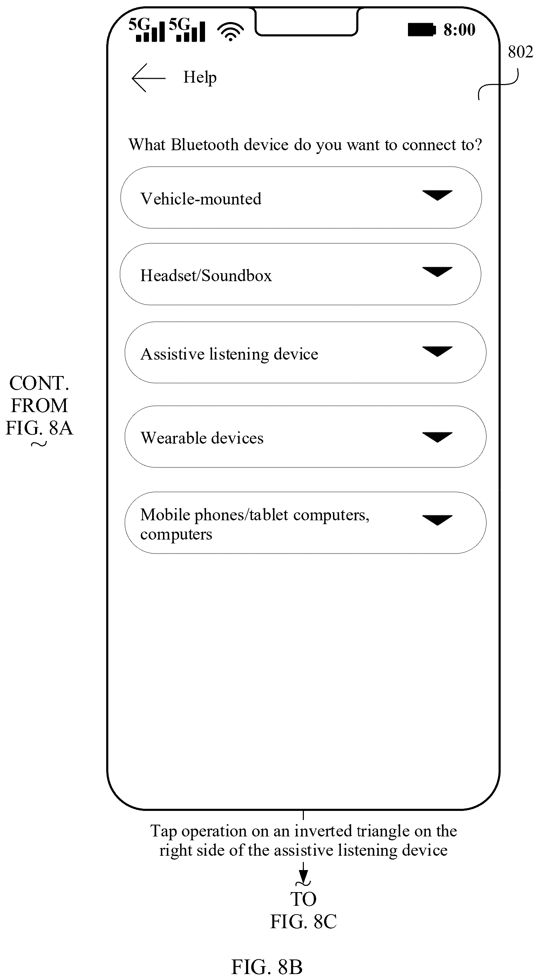

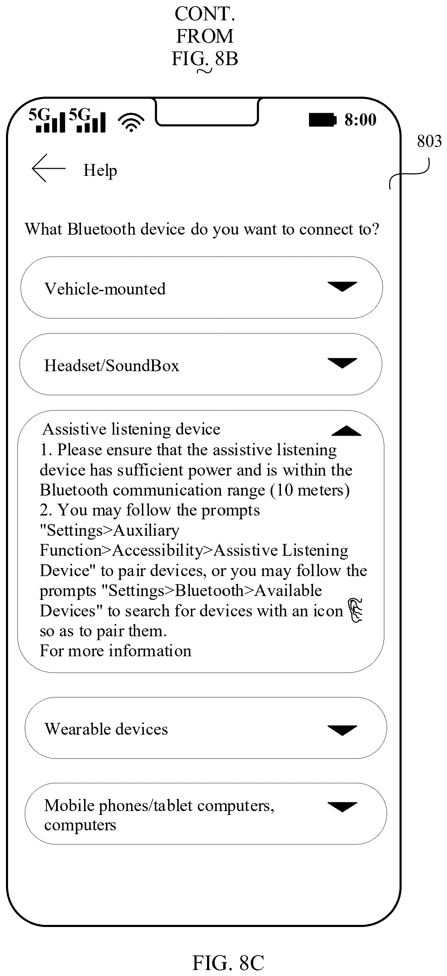

For example, the Bluetooth device management interface is an interface 801 shown in FIG. 8A, and the interface 801 includes "Help" 8011. "Help" 8011 is used to trigger the mobile phone to display connection types of various Bluetooth devices. That is, the help control is "Help" 8011 on the interface 801. The mobile phone may display an interface 802 shown in FIG. 8B in response to a tap operation performed by the user on "Help" 8011 on the interface 801, and the interface 802 includes options for a plurality of Bluetooth devices, such as "Vehicle-mounted", "Headset/Soundbox", "Assistive listening device", "Wearable device", "Mobile phone/Tablet computer", and "Computer". The mobile phone may display a connection type of a corresponding Bluetooth device in response to a viewing operation performed by the user on any Bluetooth device, for example, a tap operation on an inverted triangle on the right side of each Bluetooth device on the interface 802. For example, the mobile phone may display an interface 803 shown in FIG. 8C in response to a tap operation performed by the user on an inverted triangle on the right side of the assistive listening device on the interface 802, and the interface 803 includes an assistive listening device connection type.

By using any of the foregoing solutions, after displaying the assistive listening device on the available device list, the mobile phone may be paired with the available device in response to a pairing operation (for example, a tap operation) performed by the user on any assistive listening device (for example, the third Bluetooth device).

The following describes implementation of pairing and connection by using an available device list displayed on an assistive listening device setting interface as an example.

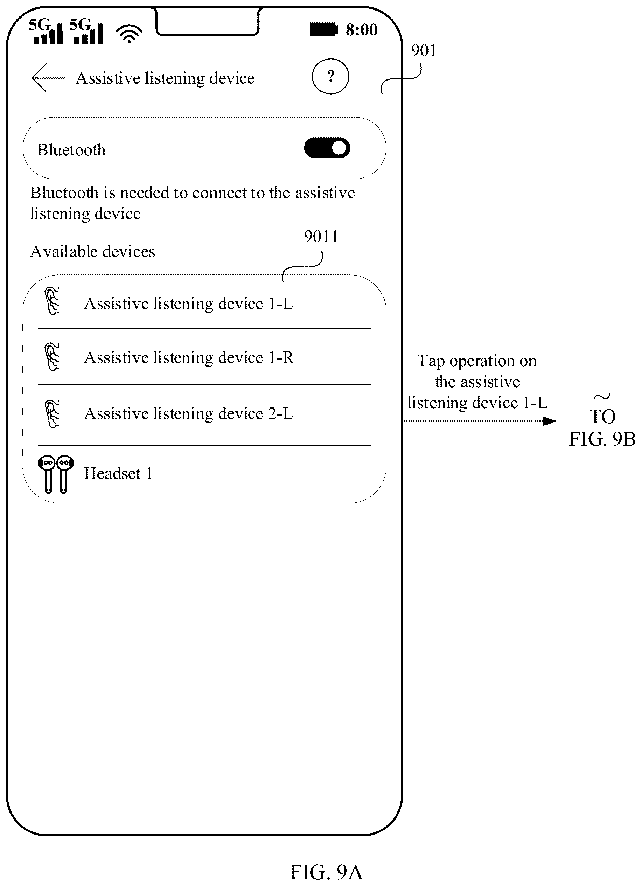

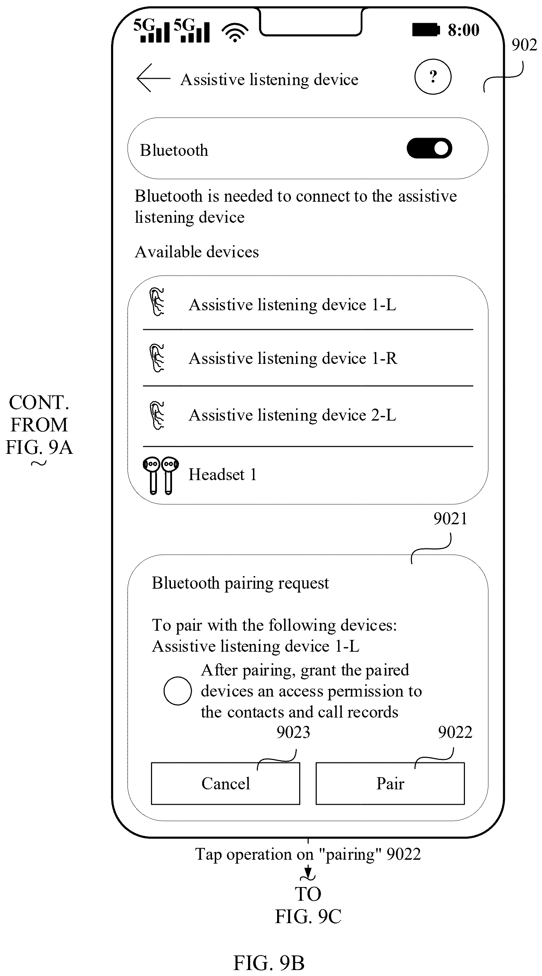

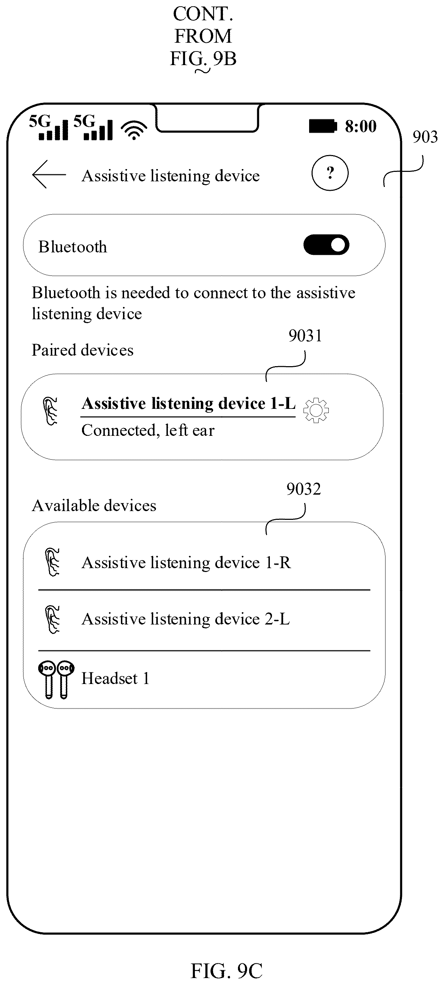

The mobile phone may display an interface 901 shown in FIG. 9A, and the interface 901 is an assistive listening device management interface. The interface 901 includes an available device list 9011, and the available device list 901 includes an assistive listening device 1-L, an assistive listening device 1-R, an assistive listening device 2-R, and a headset 1. For example, if any assistive listening device is the assistive listening device 1-L in the available device list 9011 on the interface 901, the mobile phone may display the interface 902 shown in FIG. 9B in response to a tap operation performed by the user on the assistive listening device 1-L in the available device list 9011 on the interface 901. The interface 902 is also an assistive listening device management interface. The interface 902 includes a pairing prompt box 9021, and the pairing prompt box 9021 is configured to prompt for performing pairing on the assistive listening device 1-L. The pairing prompt box 9021 further includes "Pair" 9022 and "Cancel" 9023. "Pair" 9022 is used to trigger pairing between the mobile phone and the assistive listening device 1-L, and "Cancel" 9023 is used to trigger the mobile phone to cancel pairing with the assistive listening device 1-L. After pairing and connection are completed, the mobile phone may display an interface 903 shown in FIG. 9C in response to a selection operation performed by the user on "Pair" 9022 on the interface 902, and the interface 903 is also an assistive listening device management interface. The interface 903 includes a paired device list 9031 and an available device list 9032. The paired device list 9031 includes an assistive listening device or a headset that has been paired with the mobile phone successfully. The available device list 9032 includes an unpaired device in the scanned assistive listening devices and the scanned headset. For example, if the assistive listening device 1-L has been successfully paired with the mobile phone, the paired device list 9031 includes the assistive listening device 1-L, but the available device list 9032 no longer includes the assistive listening device 1-L.

It should be understood that after being successfully paired with an assistive listening device, the mobile phone may establish a connection to the assistive listening device. For example, after the mobile phone is successfully paired with the assistive listening device 1-L, in the paired device list 9031, on the interface 903 shown in FIG. 9C, displayed on the mobile phone, a text "Connected, left ear" below the assistive listening device 1-L indicates that the mobile phone has established a connection to the assistive listening device 1-L.

The pairing and connecting process shown in FIG. 9A to FIG. 9C is merely an example. During actual implementation, this is not limited thereto. For example, in response to a pairing operation performed by the user on any assistive listening device, the mobile phone may omit a process of displaying a pairing prompt box and directly display an interface of pairing and successful connection, such as omitting the interface 902 shown in FIG. 9B and directly displaying the interface 903 shown in FIG. 9C.

In practice, the user is highly likely to need a pair of assistive listening devices to assist with hearing. Based on this, in some embodiments, after being successfully paired with one assistive listening device, the mobile phone may detect whether the available devices include another assistive listening device that forms a pair with the paired assistive listening device. If the available devices include another assistive listening device (a fourth Bluetooth device) that forms a pair with the paired assistive listening device, the mobile phone may prompt (a first prompt) the user to complete pairing with the another assistive listening device. If the available devices do not include another assistive listening device that forms a pair with the paired assistive listening device, the mobile phone does not need to prompt pairing with the another assistive listening device.

The mobile phone may compare a name of each assistive listening device in the available devices with a name of a paired assistive listening device. If a name of an assistive listening device in the available devices differs from the name of the paired assistive listening device only in identifications of left and right ears, it is determined that the assistive listening device and the paired assistive listening device form a pair of assistive listening devices. For example, the paired assistive listening device is the assistive listening device 1-L. In this case, if the available devices include an assistive listening device whose name is 1-R, and names of the two assistive listening devices are different only in identifications L and R of left and right ears, it is determined that the assistive listening device 1-R in the available devices and the paired assistive listening device 1-L form a pair of assistive listening devices.

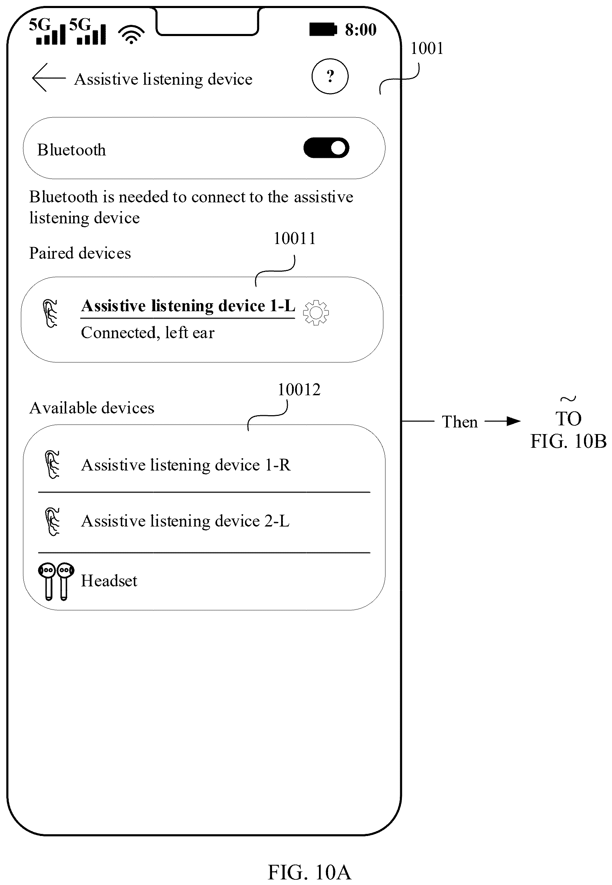

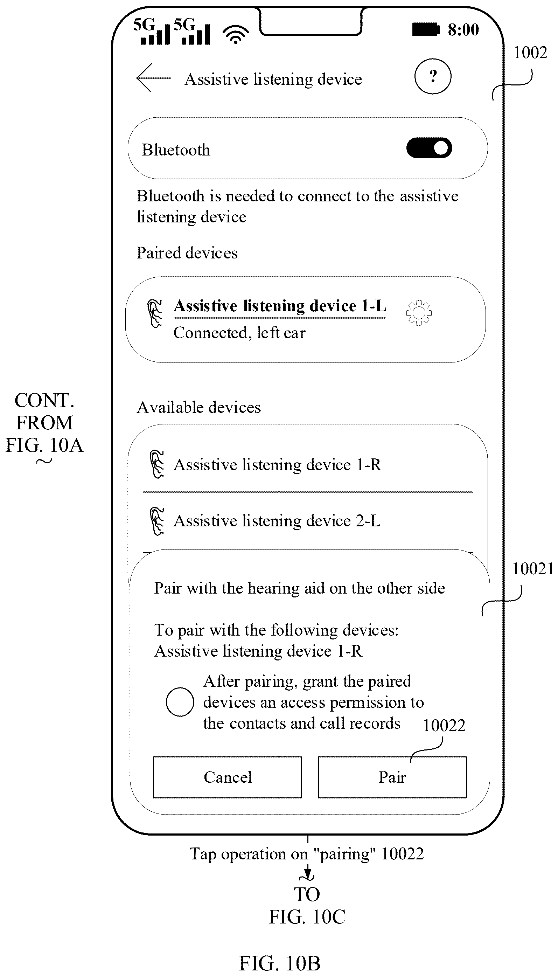

For example, after the mobile phone is paired with the assistive listening device 1-L, the mobile phone may display an interface 1001 shown in FIG. 10A, and the interface 1001 is an assistive listening device management interface. The interface 1001 includes a paired device list 10011 and an available device list 10012, and the paired device list 10011 includes the paired assistive listening device 1-L. In this case, the mobile phone may detect whether the available devices include an assistive listening device that forms a pair with the assistive listening device 1-L. For example, the available device list 10012 includes the assistive listening device 1-R, and the assistive listening device 1-R forms a pair with the assistive listening device 1-L. Therefore, the mobile phone may display an interface 1002 shown in FIG. 10B, and the interface 1002 is an assistive listening device management interface. In addition, the interface 1002 includes a prompt box 10021, and the prompt box 10021 is configured to prompt for pairing with the assistive listening device 1-R.

After prompting the user to complete pairing with another assistive listening device, the mobile phone may be paired with the another assistive listening device in response to a pairing confirmation operation performed by the user.

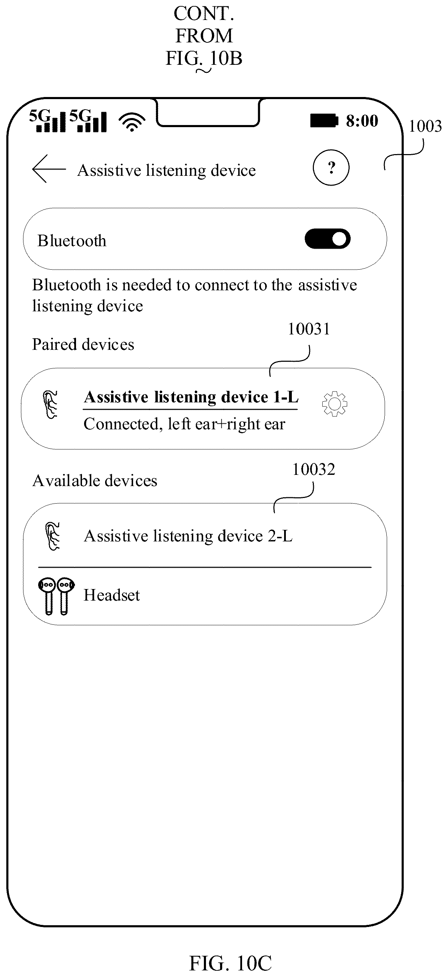

The example in FIG. 10A to FIG. 10C is still used. For example, the pairing confirmation operation is a tap operation on "Pairing" 10022 in the prompt box 10021 on the interface 1002 shown in FIG. 10B. After displaying the interface 1002 shown in FIG. 10B, the mobile phone may be paired with the assistive listening device 1-R in response to the tap operation performed by the user on "Pairing" 10022 on the interface 1002. After pairing and connection are completed, the mobile phone may display an interface 1003 shown in FIG. 10C, and the interface 1003 is also an assistive listening device management interface. The interface 1003 includes a paired device list 10031 and an available device list 10032. The paired device list 10031 includes an assistive listening device or a headset that has been paired with the mobile phone successfully. Both the assistive listening device 1-L and the assistive listening device 1-R have been paired with and successfully connected to the mobile phone, and the assistive listening device 1-L and the assistive listening device 1-R are a pair of assistive listening devices. In this case, the assistive listening device 1-L and the assistive listening device 1-R may be displayed as an assistive listening device 1 in the available device list 10031. That is, a pair of paired and successfully connected assistive listening devices are integrated into one assistive listening device for displaying. The available device list 10032 includes an unpaired device in the scanned assistive listening device and the scanned headset. Because the assistive listening device 1-L and the assistive listening device 1-R have been successfully paired with the mobile phone, the available device list 10032 no longer includes the assistive listening device 1-L and the assistive listening device 1-R.

Certainly, on the interface 1003 shown in FIG. 10C, the assistive listening device 1-L and the assistive listening device 1-R may alternatively be displayed separately in the paired device list 10031. This is not specifically limited in embodiments of this application.

In the foregoing examples shown in FIG. 9A to FIG. 9C and FIG. 10A to FIG. 10C, the mobile phone is paired with and connected to an assistive listening device based on a pairing operation performed by the user on the assistive listening device on the assistive listening device management interface.

In some embodiments, the mobile phone provides an assistive listening device control entry (a first entry) in a control center, and an interface including the control center may be referred to as a control center interface. In addition, in response to an operation (a third operation) performed by the user on the assistive listening device control entry, pairing and connection between the mobile phone and the assistive listening device may also be triggered. In this way, the user may be provided with a more convenient control entry for managing an assistive listening device, to enable the user to conveniently manage the assistive listening device.

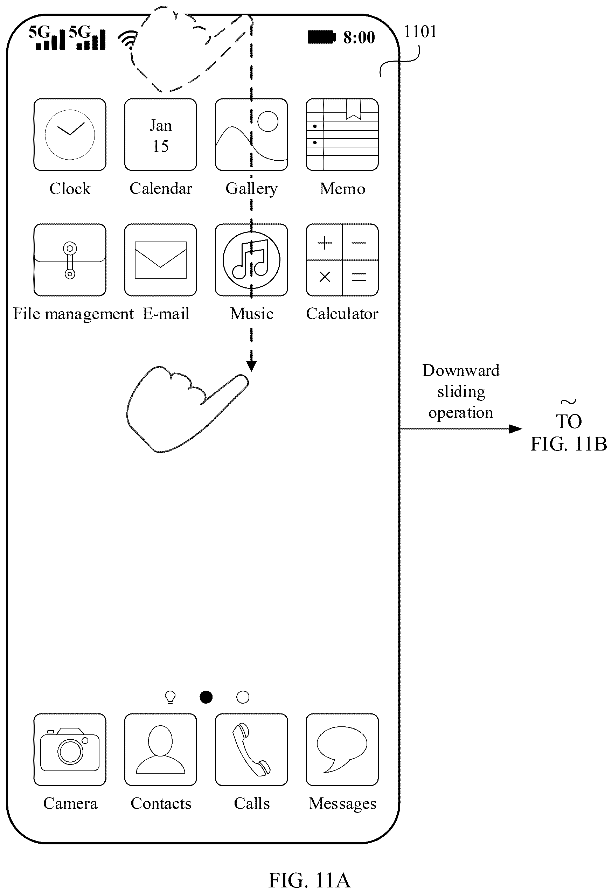

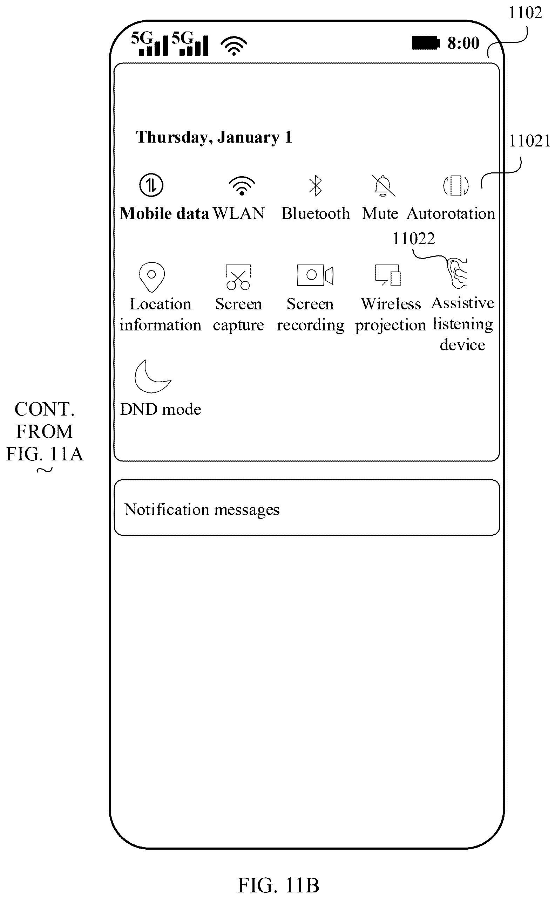

For example, the mobile phone may display an interface 1101 shown in FIG. 11A, and the interface 1101 is a home screen of the mobile phone. The mobile phone may display an interface 1102 shown in FIG. 11B in response to an operation, of sliding downward from the top, performed by the user on the interface 1101. The interface 1102 includes a control center, for example, a control center 11021. That is, the interface 11021 is a control center interface. The control center 11021 includes control entries for a plurality of control items. For example, the plurality of control items include mobile data, WLAN, Bluetooth (a second entry), sound, autorotation, location information, screen capture, screen recording, wireless projection, and a DND mode. In this embodiment, the plurality of control items may further include an assistive listening device. Accordingly, the control entries also include an assistive listening device control entry, for example, a control entry 11022.

It should be understood that all control entries in the control center may be added, removed, or re-arranged in order. The control entries and arrangement order of the control entries in the control center 11021 on the interface 1102 shown in FIG. 11B are merely examples. During actual implementation, this is not limited thereto.

Usually, a status of a control entry in the control center may include an enabled state and a disabled state. The enabled state is used to indicate that a corresponding function the control item has been enabled, and the disabled state is used to indicate that a corresponding function of the control item has been disabled.

For a control entry other than the assistive listening device control entry, when the control entry is in a disabled state, the mobile phone may enable a corresponding function of a control item in response to an operation 1, for example, a tap operation, performed by the user on the control entry. For example, a mobile data control entry in the control center 11021 on the interface 1102 shown in FIG. 11B is in an enabled state, indicating that mobile data has been enabled. In this case, the mobile phone may disable the mobile data in response to a tap operation performed by the user on the mobile data control entry in the control center 11021 on the interface 1102.

Different from another control entry, when the assistive listening device control entry is in a disabled state, the mobile phone may first detect an enabling status of Bluetooth in response to an operation 1 (namely, a third operation), for example, a tap operation, performed by the user on the assistive listening device control entry. When Bluetooth is disabled, the mobile phone may prompt the user to enable Bluetooth. When Bluetooth is enabled, the mobile phone further manages the assistive listening device.

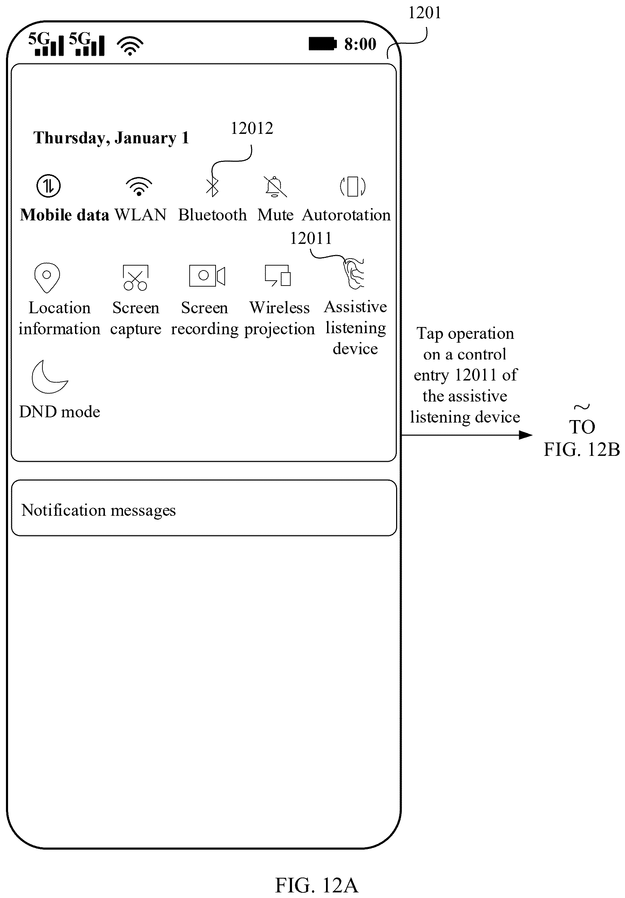

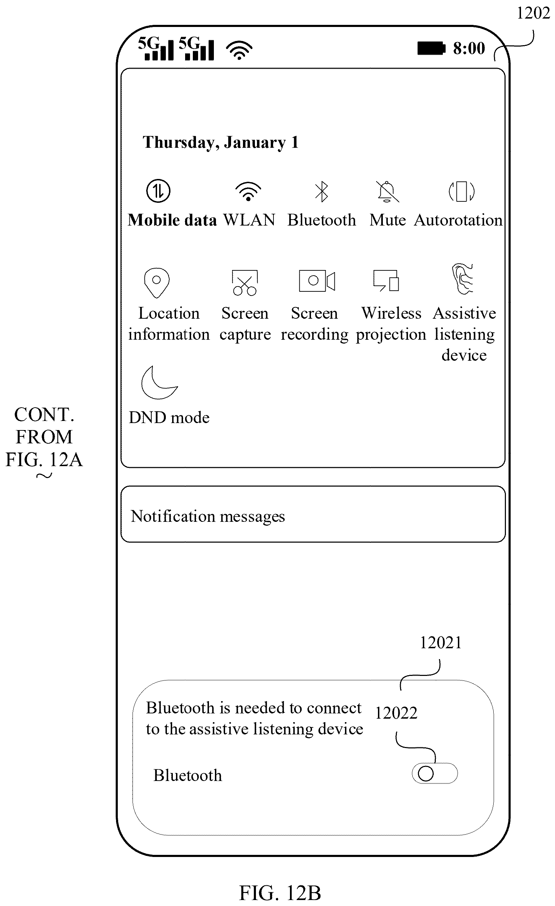

For example, the mobile phone may display an interface 1201 shown in FIG. 12A. The interface 1201 includes an assistive listening device control entry 12011 and a Bluetooth control entry 12012. The control entry 12011 is in a disabled state (represented by an ear having lines which is not bold in the figure), indicating that an assistive listening function is not enabled. The control entry 12012 is in a disabled state, indicating that Bluetooth is not enabled. Therefore, the mobile phone may display an interface 1202 shown in FIG. 12B in response to a tap operation performed by the user on the control entry 12011. The interface 1202 includes a prompt box 12021. The prompt box 12021 is used to prompt for enabling Bluetooth. The prompt box 12021 further includes a Bluetooth switch 12022. The mobile phone may enable Bluetooth in response to an enabling operation performed by the user on the Bluetooth switch 12022.

It should be understood that when the mobile phone receives the operation 1 performed by the user on the assistive listening device control entry, Bluetooth is likely to be in an enabled state. In this case, the mobile phone does not need to prompt the user to enable Bluetooth in response to the operation 1 performed by the user on the assistive listening device control entry.

After receiving the operation 1 performed by the user on the assistive listening device control entry and when Bluetooth is enabled, the mobile phone may manage the assistive listening device. That Bluetooth has been enabled includes: Bluetooth has been enabled before the mobile phone receives the operation 1 performed by the user on the assistive listening device control entry. Alternatively, Bluetooth is enabled when the user is prompted to enable Bluetooth after the mobile phone receives the operation 1 performed by the user on the assistive listening device control entry (namely, the process shown in FIG. 12A). An example in which Bluetooth has been enabled before the mobile phone receives the operation 1 performed by the user on the assistive listening device control entry is mainly used for description below.

The mobile phone may manage an assistive listening device based on an assistive listening device pairing state. The assistive listening device pairing state includes Case 1 and Case 2. In Case 1, there is no successfully paired assistive listening device. In Case 2, there is at least one successfully paired assistive listening device.

The two cases are described respectively below.

### Case 1

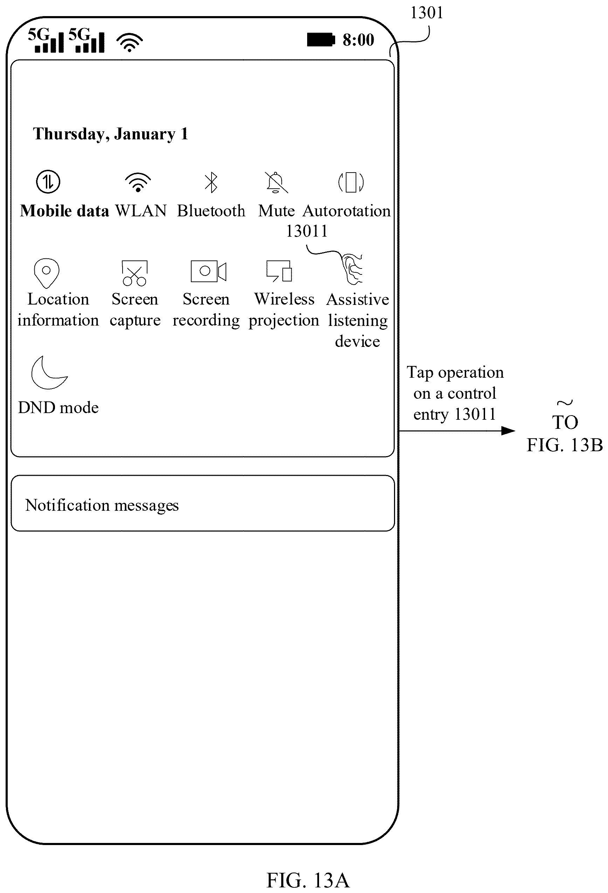

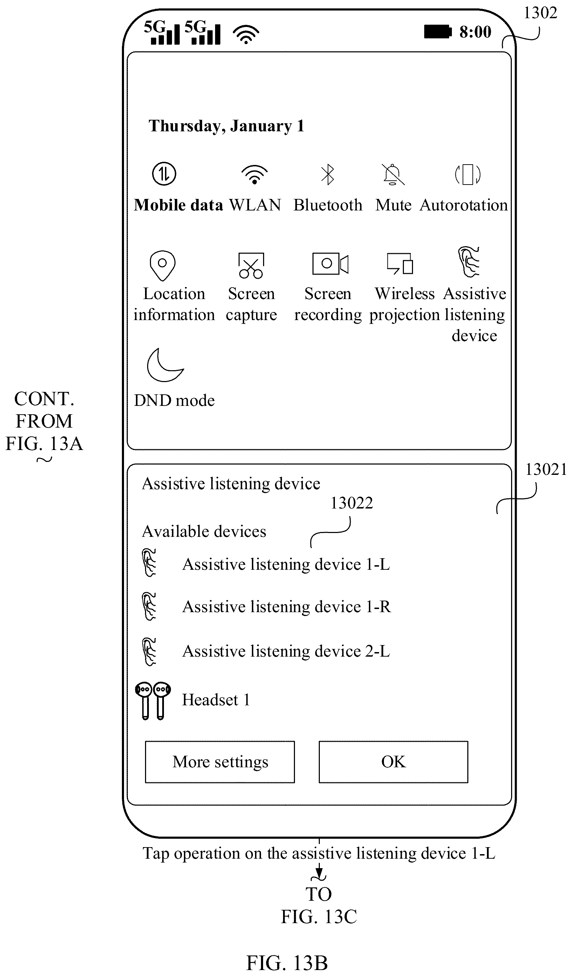

If there is no successfully paired assistive listening device, the mobile phone may display an assistive listening device available device list for the user to choose from for pairing. For example, if there is no successfully paired assistive listening device, the mobile phone may display an interface 1302 (a third interface) shown in FIG. 13B in response to a tap operation performed by the user on an assistive listening device control entry 13011 on an interface 1301 shown in FIG. 13A. The interface 1302 may be an interface obtained by popping up a prompt card based on the interface 1301. The interface 1302 includes a prompt box 13021, and the prompt box 13021 includes an available device list 13022. The available device list 13022 includes an assistive listening device and a headset in scanned available devices, such as an assistive listening device 1-L, an assistive listening device 1-R, an assistive listening device 2-R, and a headset 1. That is, Bluetooth devices on the third interface are all unpaired.

The mobile phone may be paired with any available device in response to a pairing operation (for example, a tap operation) performed by the user on the available device in the assistive listening device available device list. The example in FIG. 13A to FIG. 13D is still used. The mobile phone may be paired with the assistive listening device 1-L in response to a tap operation performed by the user on the assistive listening device 1-L in the available device list 13022 on the interface 1302 shown in FIG. 13B.

During a pairing process, the mobile phone may indicate that pairing is in progress. It should be understood that after pairing is completed, the mobile phone may establish the connection to the assistive listening device. Therefore, after pairing is completed, the mobile phone may prompt that a connection has been established.

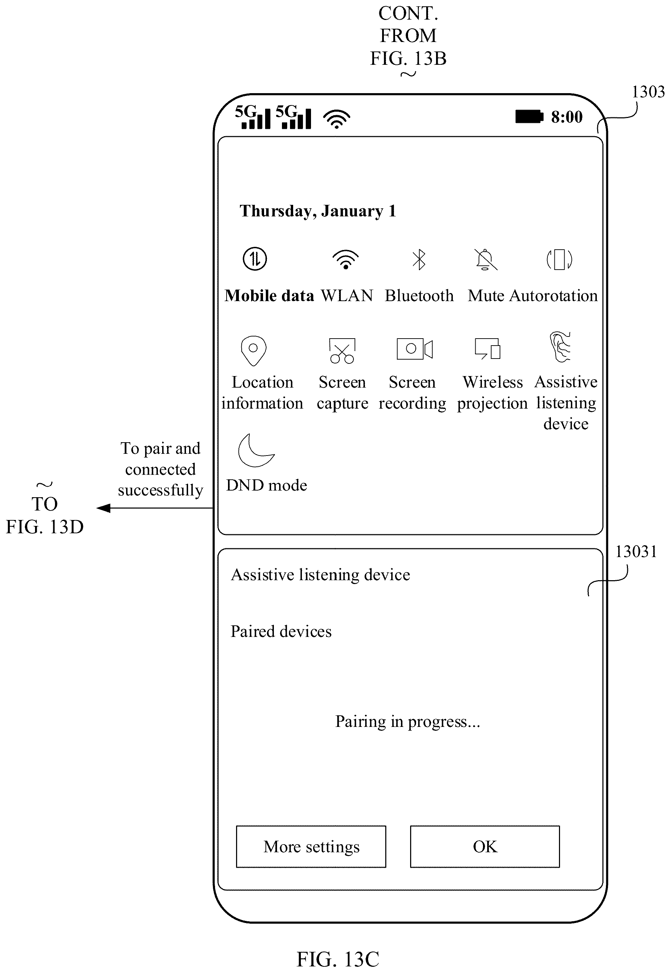

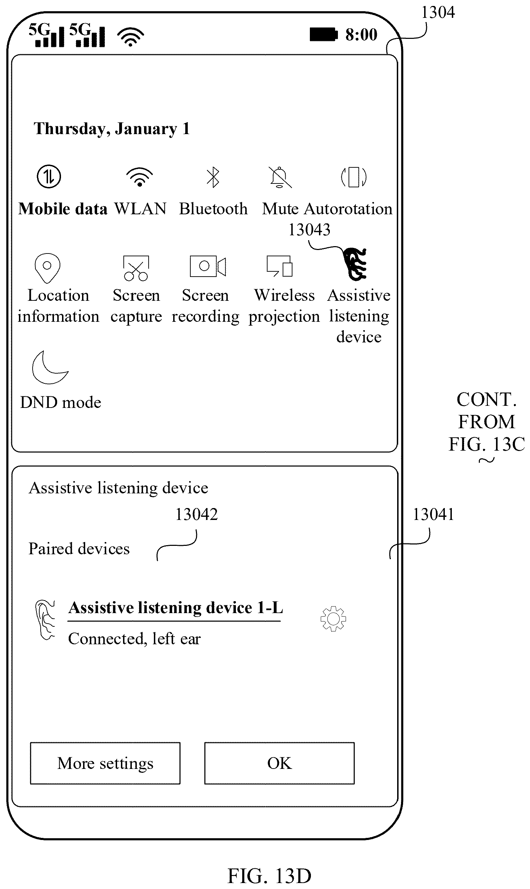

The example in FIG. 13A to FIG. 13D is still used. The mobile phone may first display an interface 1303 shown in FIG. 13C in response to a tap operation performed by the user on the assistive listening device 1-L in the available device list 13022 on the interface 1302 shown in FIG. 13B. The interface 1303 includes a prompt box 13031, and the prompt box 13031 includes the text "Pairing in progress" to indicate that pairing is in progress. After pairing is successfully completed, the mobile phone may display an interface 1304 shown in FIG. 13D. The interface 1304 includes a prompt box 13041, and the prompt box 13041 includes a paired device list 13042. The paired device list 13042 includes the successfully paired assistive listening device 1-L. In addition, "Connected" is displayed below the assistive listening device 1-L to indicate that the connection has been established.

In addition, after the successful connection, the assistive listening device control entry in the control center is in an enabled state. For example, on the interface 1304 shown in FIG. 13D, an assistive listening device control entry 13043 is in an enabled state, indicating that an assistive listening function has been enabled, for example, indicating that a connection between the assistive listening device 1-L and the mobile phone has been successfully established.

After being paired with and connected to one assistive listening device, if the available devices include another assistive listening device that forms a pair with the paired assistive listening device, the mobile phone may also prompt the user to complete pairing with the another assistive listening device. If the available devices do not include another assistive listening device that forms a pair with the paired assistive listening device, the mobile phone does not need to prompt pairing with the another assistive listening device; and the mobile phone may be paired with the another assistive listening device in response to a pairing confirmation operation performed by the user. For specific implementation, refer to the foregoing example in FIG. 10A to FIG. 10C and related descriptions thereof. Details are not described herein again.

### Case 2

If there is at least one successfully paired assistive listening device, the mobile phone may establish a connection to one of the at least one successfully paired assistive listening device.

Further, if there is only one successfully paired assistive listening device, the mobile phone establishes a connection to the assistive listening device.

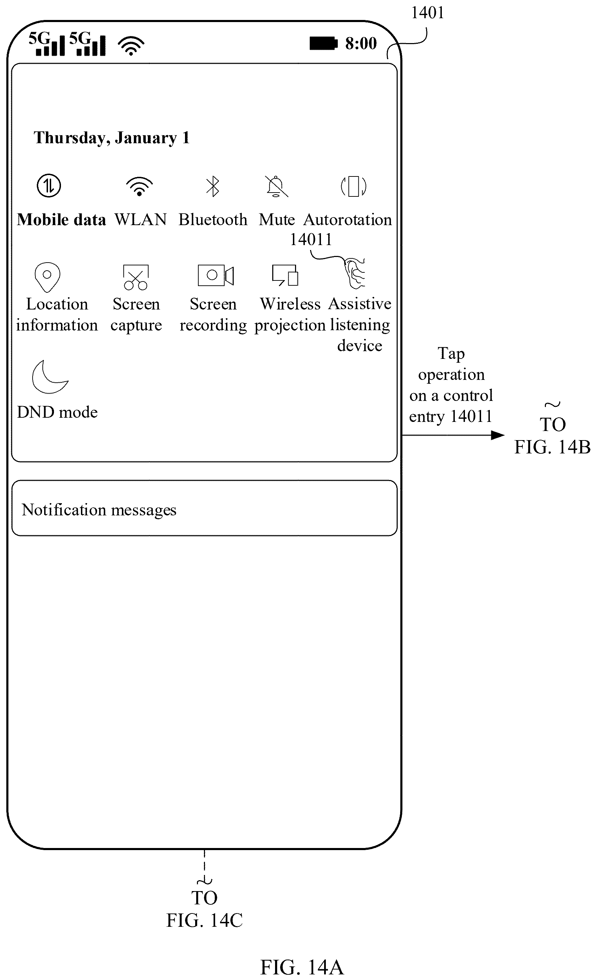

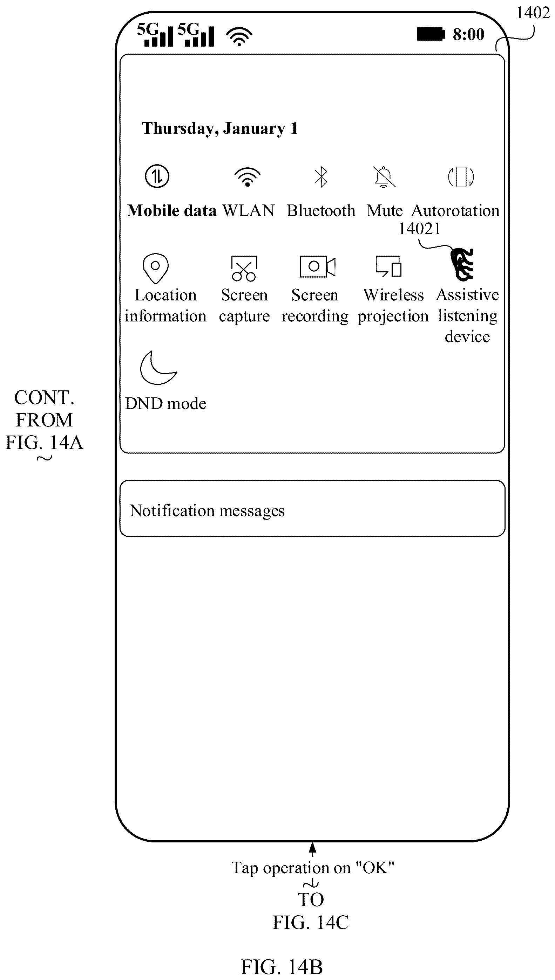

For example, if there is only one successfully paired assistive listening device, the mobile phone may display an interface 1402 shown in FIG. 14B in response to a tap operation (namely, a third operation) performed by the user on an assistive listening device control entry 14011 (a first entry) on an interface 1401 shown in FIG. 14A. An assistive listening device control entry 14021 on the interface 1402 is in an enabled state (represented by an ear having bold lines in the figure), indicating that an assistive listening function has been enabled, for example, indicating that a connection between the assistive listening device 1-L and the mobile phone has been successfully established.

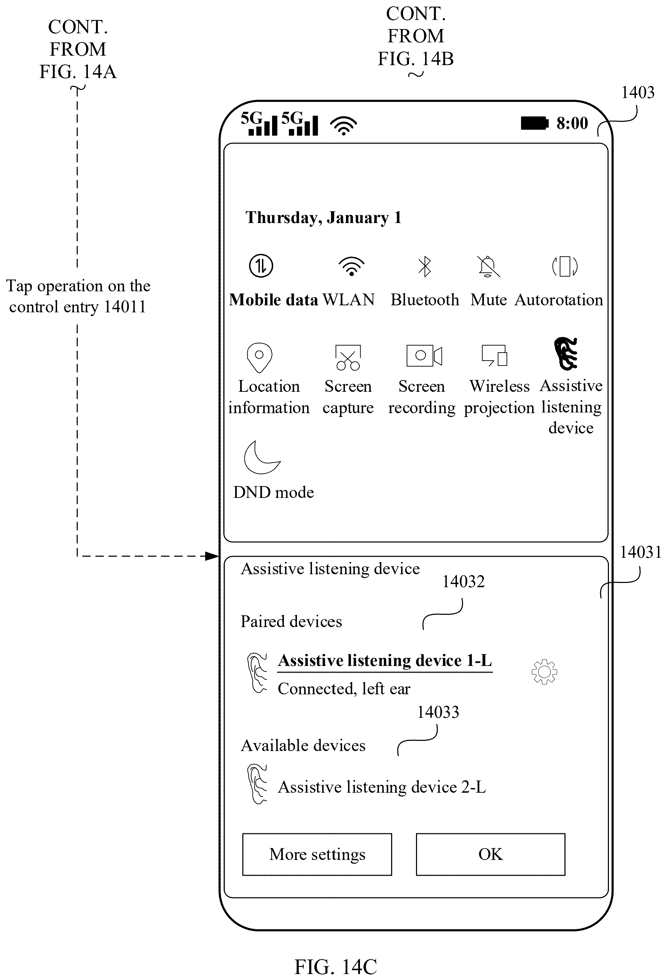

In practice, the user may not expect to establish a connection to the paired assistive listening device. Based on this, if there is only one successfully paired assistive listening device, after establishing a connection to the headset, the mobile phone may prompt an available assistive listening device and an available headset, so that the user can conveniently switch devices for connection. For example, the mobile phone may display an interface 1403 shown in FIG. 14C in response to a tap operation performed by the user on an assistive listening device control entry 14011 on the interface 1401 shown in FIG. 14A. Different from the interface 1402, the interface 1403 includes a prompt box 14031. The prompt box 14031 includes a paired device list 14032 and an available device list 14033. The available device list 14033 includes remained available assistive listening devices and headsets, so that the user can conveniently switch devices for connection. The mobile phone may display the interface 1401 in response to a tap operation performed by the user on "OK" on the prompt box 14031 on the interface 1403.

If there are a plurality of successfully paired assistive listening devices, the mobile phone establishes a connection to one of the plurality of assistive listening devices. Specifically, the mobile phone may prompt the plurality of successfully paired assistive listening devices. In this case, the mobile phone establishes a connection to an assistive listening device selected by the user in response to a selection operation performed by the user on one of the assistive listening devices.

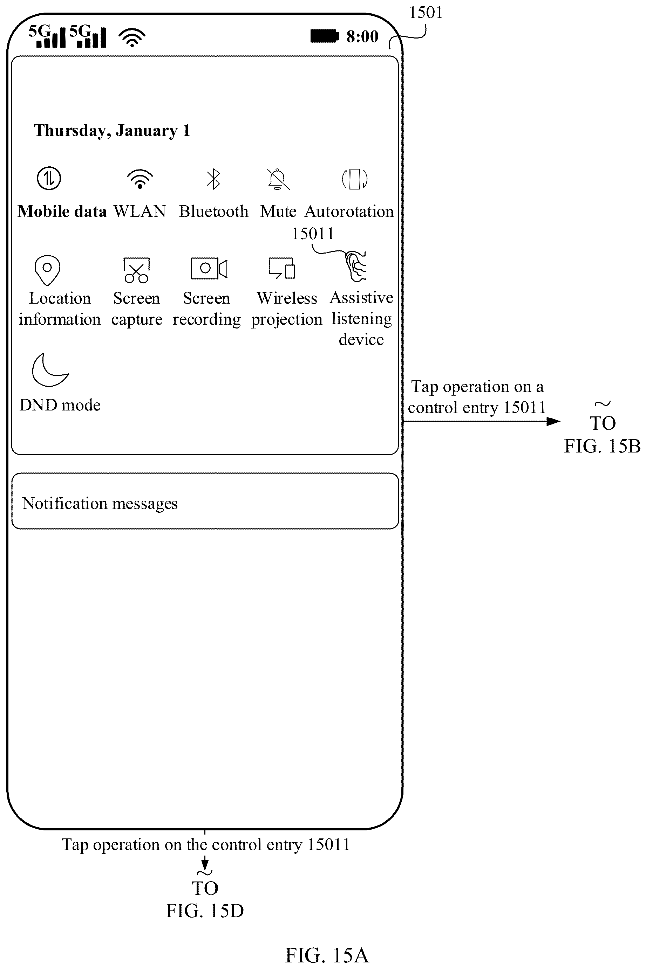

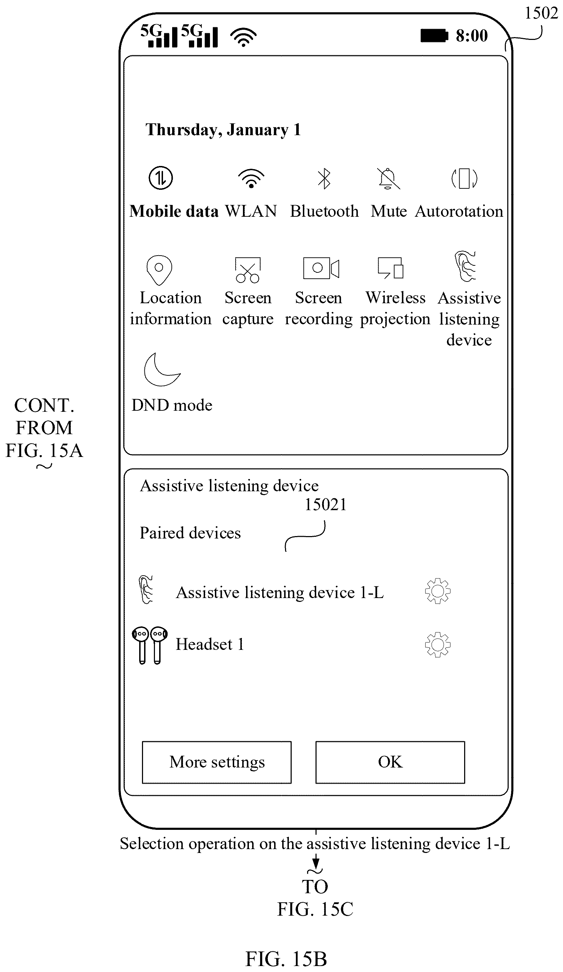

For example, if there are a plurality of successfully paired assistive listening devices, the mobile phone may display an interface 1502 (a third interface) shown in FIG. 15B in response to a tap operation performed by the user on an assistive listening device control entry 15011 on an interface 1501 shown in FIG. 15A. The interface 1502 includes a paired device list 15021. The paired device list 15021 includes a plurality of successfully paired assistive listening devices and a plurality of successfully paired headsets, such as an assistive listening device 1-L and a headset 1. That is, Bluetooth devices on the third interface are all paired.

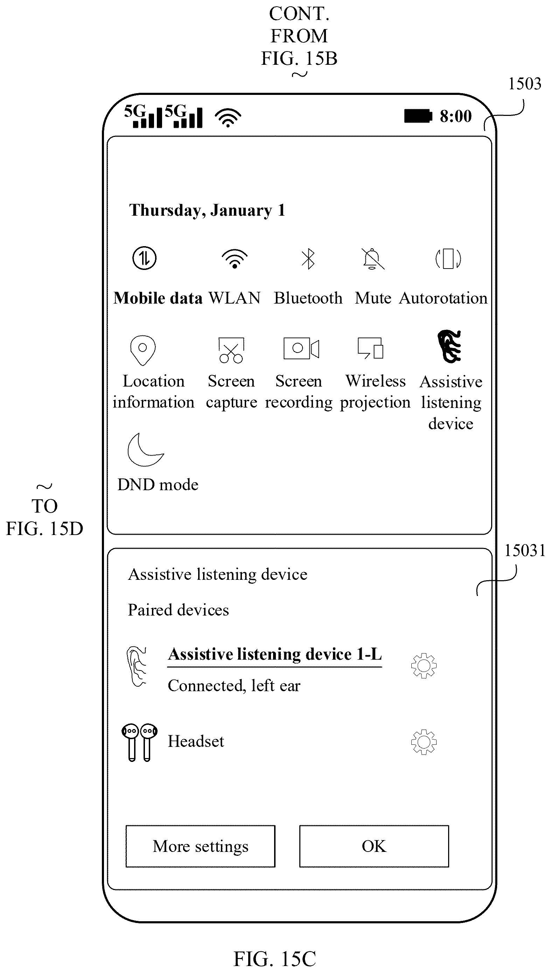

The mobile phone may establish a connection to the assistive listening device 1-L in response to a selection operation performed by the user on the assistive listening device 1-L. After the successful connection, the mobile phone may display an interface 1503 shown in FIG. 15C. The interface 1503 includes a prompt box 15031, and a text "Connected" displayed below the assistive listening device 1-L on the prompt box 15031 indicates that the mobile phone has established a connection to the assistive listening device 1-L. An assistive listening device control entry 15031 on the interface 1503 is in an enabled state, indicating that an assistive listening function has been enabled, for example, indicating that a connection between the assistive listening device 1-L and the mobile phone has been successfully established.

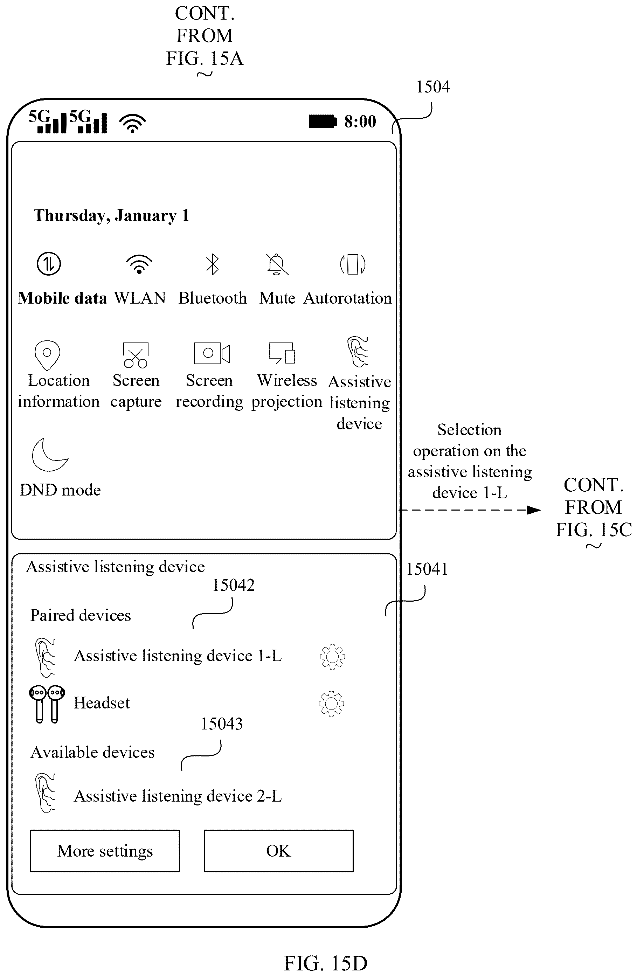

Similarly, the user may not expect to establish a connection to the plurality of paired devices. Based on this, if there are a plurality of successfully paired assistive listening devices, the mobile phone may prompt the plurality of successfully paired assistive listening devices, available assistive listening devices, and available headsets in response to an operation 1 performed by the user on the assistive listening device control entry, so that the user can conveniently select an assistive listening device or a headset other than the paired assistive listening devices to establish a connection. For example, if there are a plurality of successfully paired assistive listening devices, the mobile phone may display an interface 1504 shown in FIG. 15D in response to a tap operation performed by the user on an assistive listening device control entry 15011 on an interface 1501 shown in FIG. 15A. Different from the interface 1502, the interface 1504 includes a prompt box 15041. The prompt box 15041 includes a paired device list 15042 and an available device list 15043. The available device list 15043 includes remained available assistive listening devices and headsets, so that the user can conveniently select an assistive listening device or a headset other than the assistive listening devices in the paired device list 15042 to establish a connection. The mobile phone may display the interface 1503 shown in FIG. 15C in response to a tap operation performed by the user on the available device list 15043 on the interface 1504. The mobile phone may be paired with and connected to any device in response to a pairing operation performed by the user on the device in the paired device list 15042 on the interface 1504. For a specific process, refer to the foregoing descriptions about pairing and connection. Details are not described herein again.

Similarly, after being paired with and connected to one assistive listening device, if the available devices include another assistive listening device that forms a pair with the paired assistive listening device, the mobile phone may also prompt the user to complete pairing with the another assistive listening device. If the available devices do not include another assistive listening device that forms a pair with the paired assistive listening device, the mobile phone does not need to prompt pairing with the another assistive listening device; and the mobile phone may be paired with the another assistive listening device in response to a pairing confirmation operation performed by the user. For specific implementation, refer to the foregoing example in FIG. 10A to FIG. 10C and related descriptions thereof. Details are not described herein again.

It should be understood that when a paired assistive listening device is connected to another electronic device (for example, a tablet computer), or a paired assistive listening device is far away from the mobile phone, the assistive listening device cannot establish a connection to the mobile phone. Therefore, in Case 2, a connection failure may occur during the process of establishing a connection between the mobile phone and the paired assistive listening device. Based on this, in some embodiments, if the connection between the mobile phone and the paired assistive listening device fails, the mobile phone may prompt the connection failure and a possible reason for the failure to indicate the user to connect to the assistive listening device.

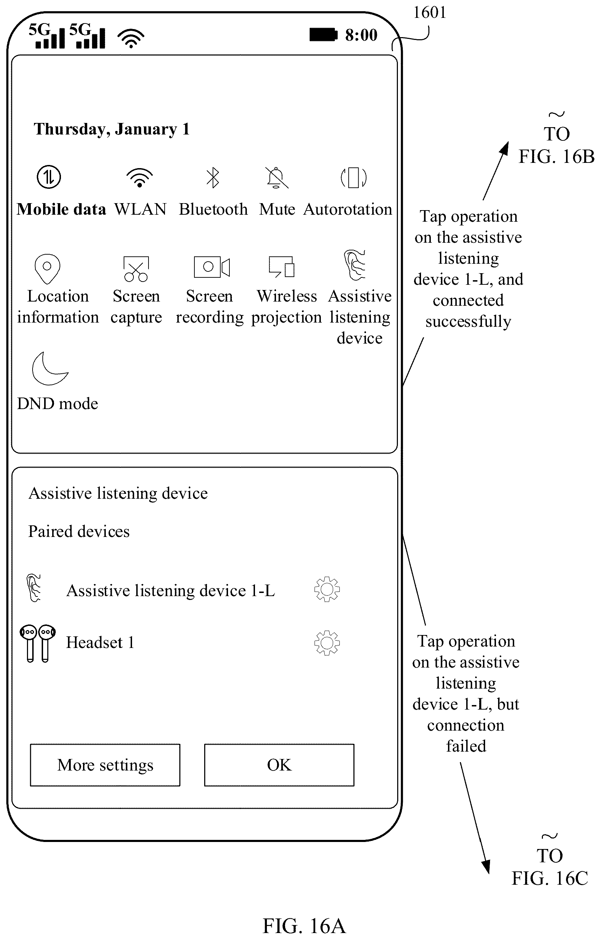

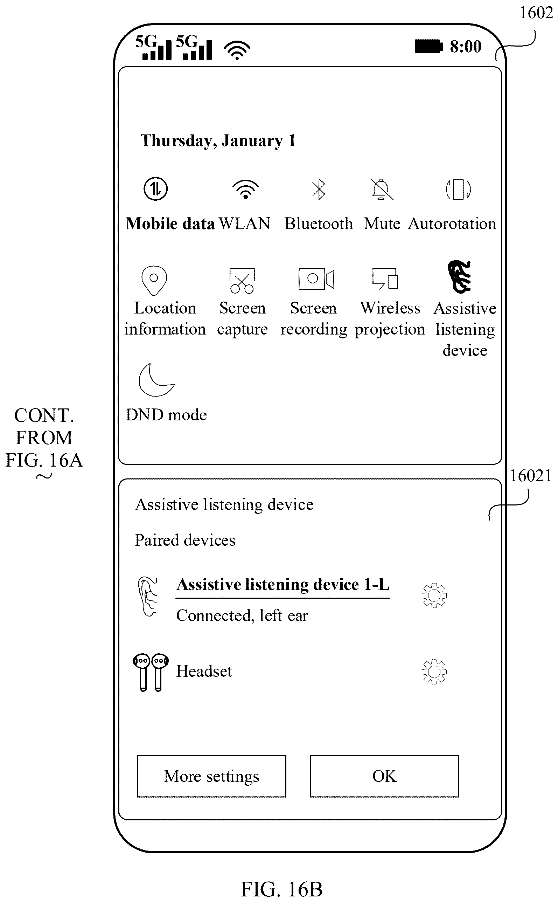

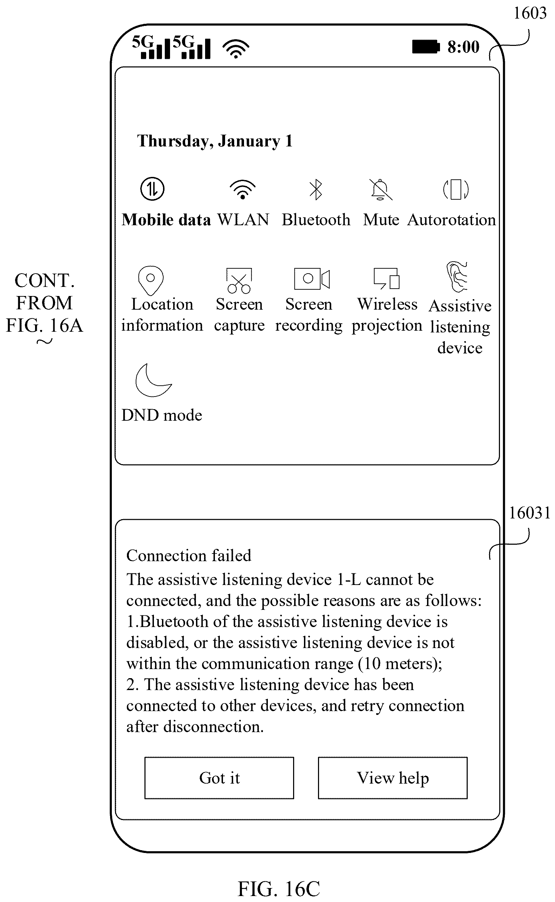

An example in which there are a plurality of successfully paired assistive listening devices in Case 2 is used. When there are a plurality of successfully paired assistive listening devices, the mobile phone may display an interface 1601 shown in FIG. 16A in response to the operation 1 performed by the user on the assistive listening device control entry in the control center. The mobile phone may establish a connection to the assistive listening device 1-L in response to a selection operation performed by the user on the assistive listening device 1-L on the interface 1601. If the connection is successfully established, the mobile phone may display an interface 1602 shown in FIG. 16B, and "Connected" is displayed below the assistive listening device 1-L on the interface 1602 to indicate that the connection has been established successfully. If a connection failure occurs, the mobile phone may display an interface 1603 shown FIG. 16C, and the interface 1603 includes a prompt box 16031. The prompt box 16031 prompts "Connection fail, unable to connect to the assistive listening device 1-L, and possible reasons are as follows: 1. Bluetooth of the device is disabled or is not within a communication range (10 meters); 2. The device has been connected to another device, please retry connection after disconnection" to indicate the connection failure and the reasons of the connection failure.

In addition, during a process of managing an assistive listening device through the assistive listening device control entry in the control center, the mobile phone may further provide a quick entry to trigger access to the assistive listening device management interface. Therefore, the user can quickly discover the assistive listening device through the assistive listening device control entry, and can quickly enter the assistive listening device management interface while performing pairing with the assistive listening device and establishing a connection to the assistive listening device. For example, the quick entry to the assistive listening device management interface is "More settings" on the interfaces 1302 to 1304 shown in FIG. 13B to FIG. 13D, the interface 1403 shown in FIG. 14C, the interfaces 1502 to 1504 shown in FIG. 15B to FIG. 15D, and the interfaces 1601 and 1602 shown in FIG. 16A and FIG. 16B. The mobile phone may display the assistive listening device management interface, for example, the foregoing interface 301 shown in FIG. 3, in response to a selection operation performed by the user on "More settings" on any of the interfaces.

In addition, during the process of managing the assistive listening device through the assistive listening device control entry in the control center, the mobile phone may display various prompts, such as a prompt for an available assistive listening device, a prompt for a paired assistive listening device, and a prompt for a reason for a connection failure. When the prompts are displayed, the mobile phone may cancel display of the prompts in response to an operation, of canceling the prompts, performed by the user. A prompt for a paired assistive listening device is used as an example. The mobile phone may prompt the paired assistive listening device through a prompt box 16021 on the interface 1602 shown in FIG. 16B. The prompt box 16021 includes "OK", and the operation of canceling the prompts may be a selection operation on "OK". Therefore, the mobile phone may cancel display on the prompt box 16021 in response to the selection operation performed by the user on "OK".

After the assistive listening function is enabled through the assistive listening device control entry provided in the control center, that is, after the connection between the assistive listening device and the mobile phone is successfully established, the assistive listening device control entry is in an enabled state. In this case, the mobile phone may disable the assistive listening function, that is, disconnect the connection between the assistive listening device and the mobile phone, in response to the operation 1 performed by the user on the assistive listening device control entry. After the assistive listening function is disabled, the assistive listening device control entry returns to the disabled state.

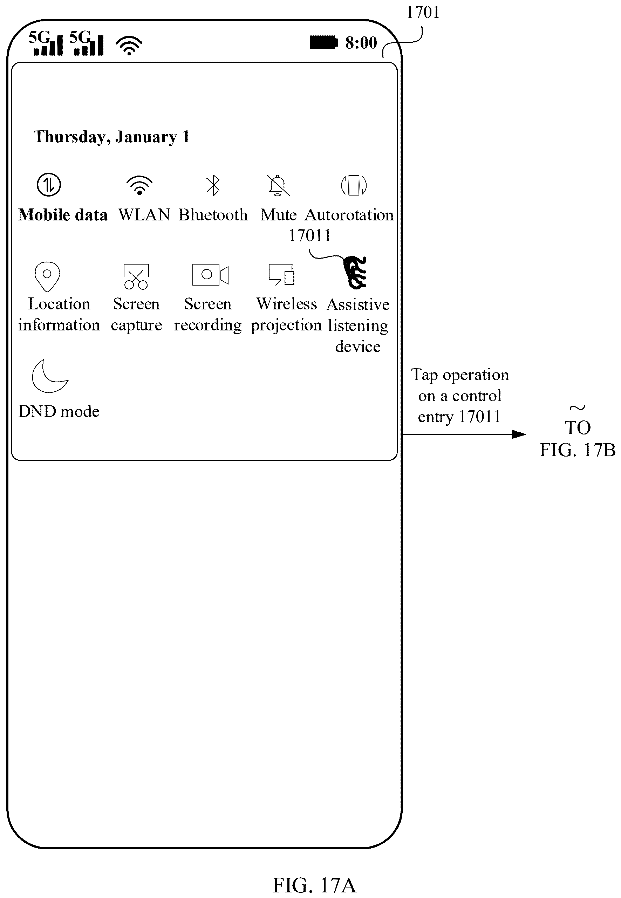

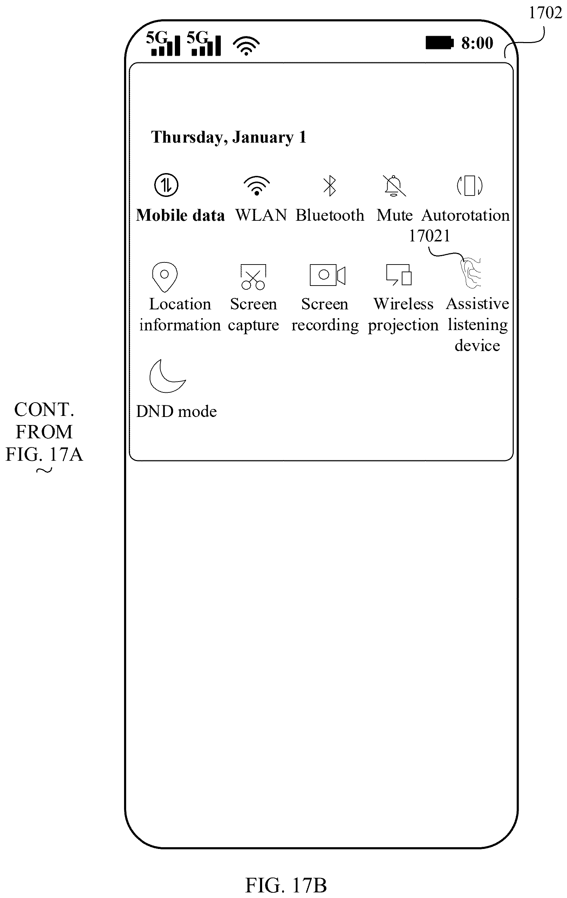

For example, after the assistive listening function is enabled, the mobile phone may display an interface 1701 shown in FIG. 17A. An assistive listening device control entry 17011 on the interface 1701 is in the enabled state. The mobile phone may disable the assistive listening function in response to a tap operation performed by the user on the assistive listening device control entry 17011. After the assistive listening function is disabled, the mobile phone may display an interface 1702 shown in FIG. 17B. An assistive listening device control entry 17021 on the interface 1702 is in the disabled state.

In another embodiment, the mobile phone does not provide a separate assistive listening device control entry in the control center of the desktop, but integrates the assistive listening device control entry into a Bluetooth control entry (a third entry). Same as the foregoing embodiment, in this embodiment, an interface displaying the control center may be referred to as a control center interface. The mobile phone may enable or disable a Bluetooth function in response to an operation 1 (a sixth operation) performed by the user on the Bluetooth control entry. The mobile phone may display the assistive listening device control entry (a fourth entry) in response to an operation 2 (a fifth operation) performed by the user on the Bluetooth control entry.

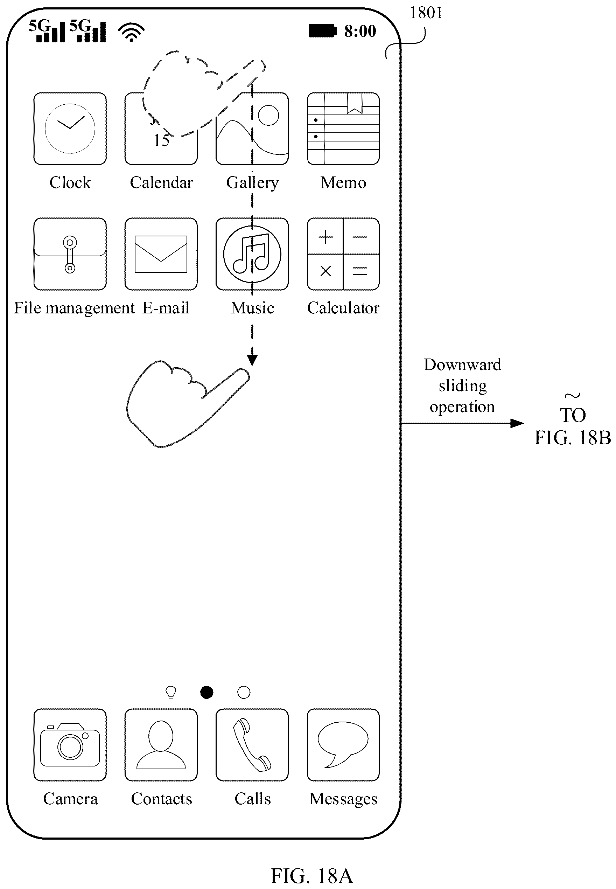

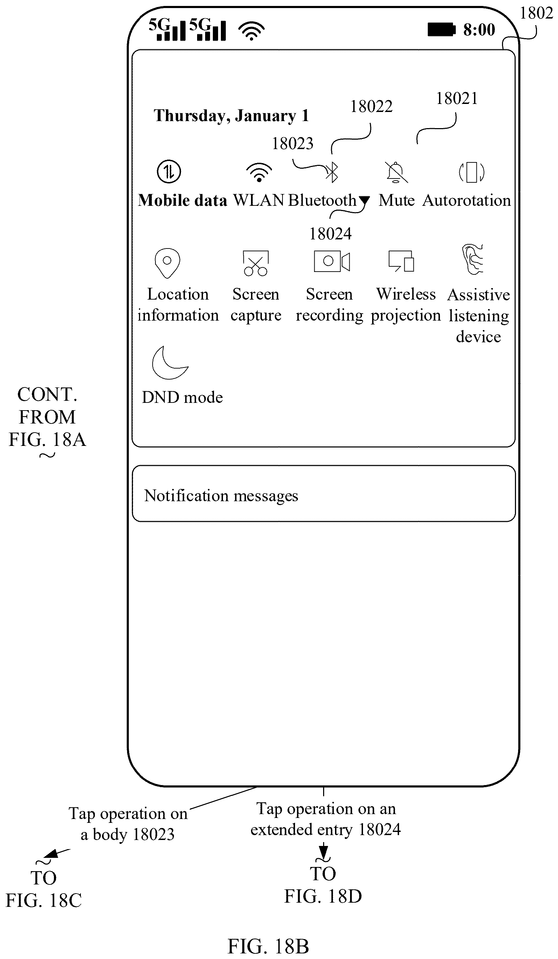

For example, the mobile phone may display an interface 1801 shown in FIG. 18A, and the interface 1801 is a home screen of the mobile phone. The mobile phone may display an interface 1802 shown in FIG. 18B in response to a downward sliding operation performed by the user on the interface 1801. The interface 1802 includes a control center, for example, a control center 18021. That is, the interface 1902 is a control center interface. The control center 18021 includes a Bluetooth control entry 18022 (namely, a third entry).

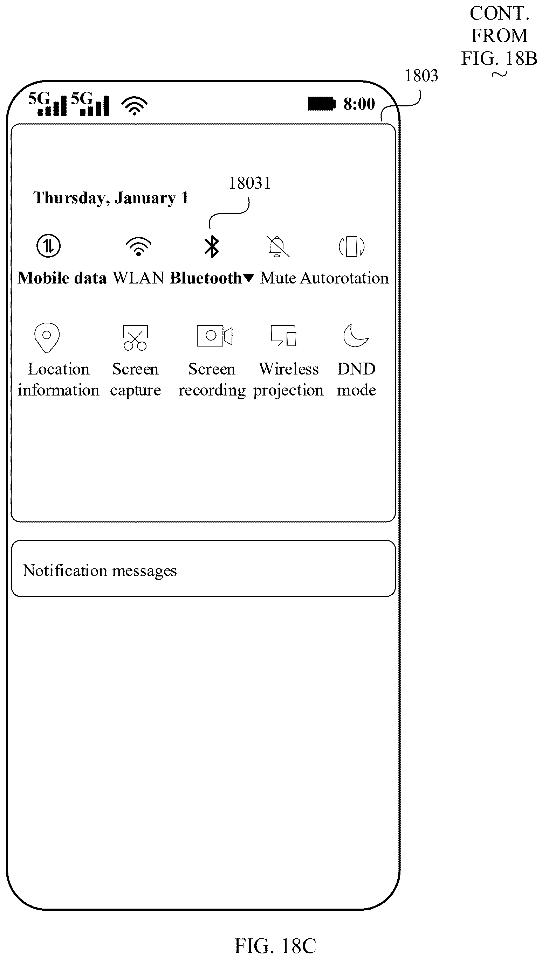

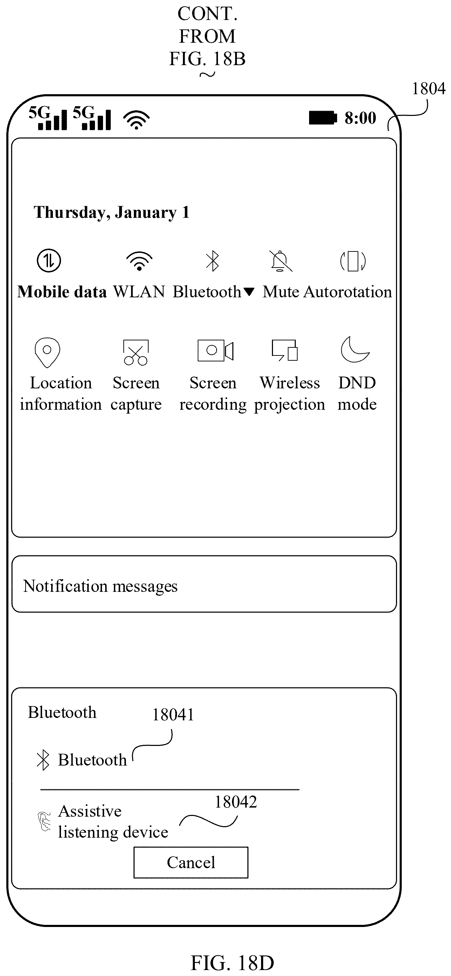

For example, the operation 1 is a tap operation on a body 18023 (a fifth entry) of the control entry 18022, and an operation 2 is a tap operation on an extended entry 18024 (namely, a fourth entry, for example, an inverted triangle) of the control entry 18022. The mobile phone may enable the Bluetooth function in response to the tap operation performed by the user on the body 18023 of the control entry 18022 on the interface 1802 shown in FIG. 18B. After the Bluetooth function is enabled, the mobile phone may display an interface 1803 shown in FIG. 18C. A Bluetooth control entry 18031 on the interface 1803 is in an enabled state, indicating that the Bluetooth function has been enabled. The mobile phone may display an interface 1804 (a fourth interface) shown in FIG. 18D in response to the tap operation performed by the user on the extended entry 18024 of the control entry 18022 on the interface 1802 shown in FIG. 18B. The interface 1804 includes a Bluetooth control entry 18041 (namely, a fifth entry) and an assistive listening device control entry 18042 (namely, a fourth entry). Further, the mobile phone may display a Bluetooth management interface in response to a selection operation performed by the user on the Bluetooth control entry 18041. For the interfaces shown in FIG. 7A to FIG. 7C, details are not described herein again.

After displaying the assistive listening device control entry in response to the operation 2, the mobile phone may complete, based on a selection operation performed by the user on the assistive listening device control entry, management on the assistive listening device. The assistive listening device control entry herein may be analogized to the assistive listening device control entry separately set in the control center in the foregoing embodiments. Accordingly, for a management process of an assistive listening device, refer to the foregoing process of managing an assistive listening device based on the assistive listening device control entry separately set in the control center by the user, for example, refer to the foregoing management processes shown in FIG. 12A and FIG. 12B to FIG. 16A to FIG. 16C. Details are not described herein again.

However, it should be noted that in this embodiment, because there is no separate assistive listening device control entry in the control center, after the assistive listening function is enabled or disabled, enabling or disabling of the assistive listening function cannot be displayed from the separate assistive listening device control entry in the control center.

In a specific implementation, the mobile phone may alternatively distinguish between an enabling status of the Bluetooth function and/or an enabling status of the assistive listening function through the Bluetooth control entry in the control center.

For example, when the Bluetooth function is not enabled, the Bluetooth control entry is in a disabled state, for example, a state of the Bluetooth control entry 18022 on the interface 1802 shown in FIG. 18B. It should be understood that disabling of a Bluetooth function indicates disabling of an assistive listening function.

When the Bluetooth function is enabled, but the assistive listening function is not enabled, the Bluetooth control entry is in an enabled state, but does not prompt that the assistive listening function has been enabled, for example, is in a state of the assistive listening device control entry 18031 on the interface 1803 shown in FIG. 18C.

When the assistive listening function is enabled, the Bluetooth control entry is in an enabled state, and prompts that the assistive listening function has been enabled. It should be understood that the assistive listening function relies on a Bluetooth technology. Therefore, enabling of an assistive listening function indicates enabling of a Bluetooth function.

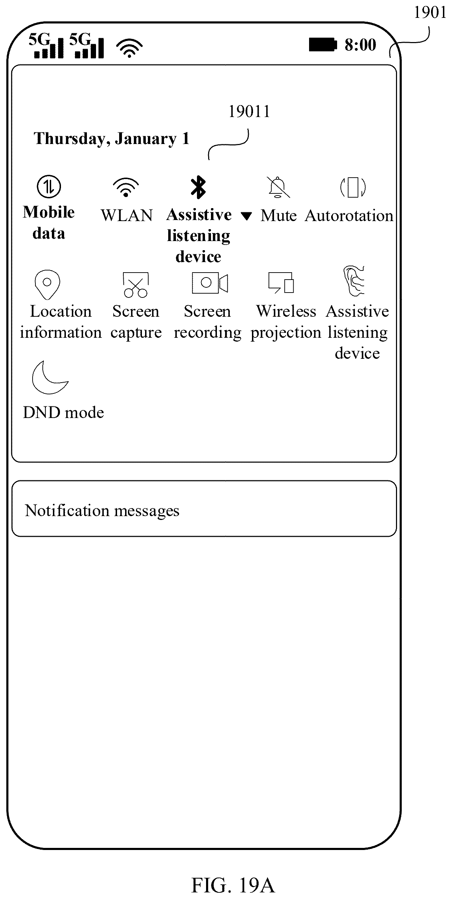

For example, after the assistive listening function is enabled, the mobile phone may display an interface 1901 shown in FIG. 19A. The interface 1901 includes a Bluetooth control entry 19011. The control entry 19011 is not only in an enabled state, but also has a text prompt of "Assistive listening device" to indicate that the assistive listening function has been enabled.

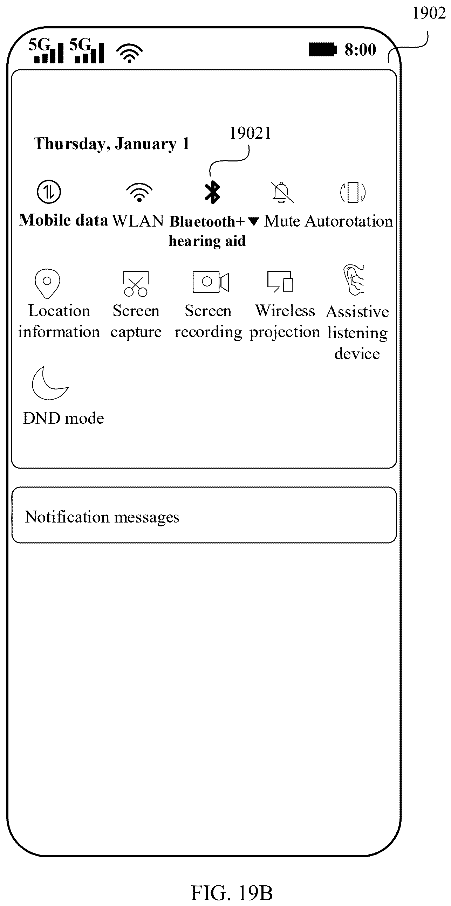

For another example, after the assistive listening function is enabled, the mobile phone may display an interface 1902 shown in FIG. 19B. The interface 1902 includes a Bluetooth control entry 19021. The control entry 19021 is not only in an enabled state, but also has a text prompt of "Bluetooth+hearing aid" to indicate that the assistive listening function is further enabled on the basis of enabling the Bluetooth function.

After establishing a connection to the assistive listening device by using any of the foregoing solutions, the mobile phone may further set a volume of the assistive listening device.

In some embodiments, the mobile phone may display a connected assistive listening device setting interface in response to a setting operation performed by the user on a connected assistive listening device. On the connected assistive listening device setting interface, the mobile phone may set a volume of the connected assistive listening device.

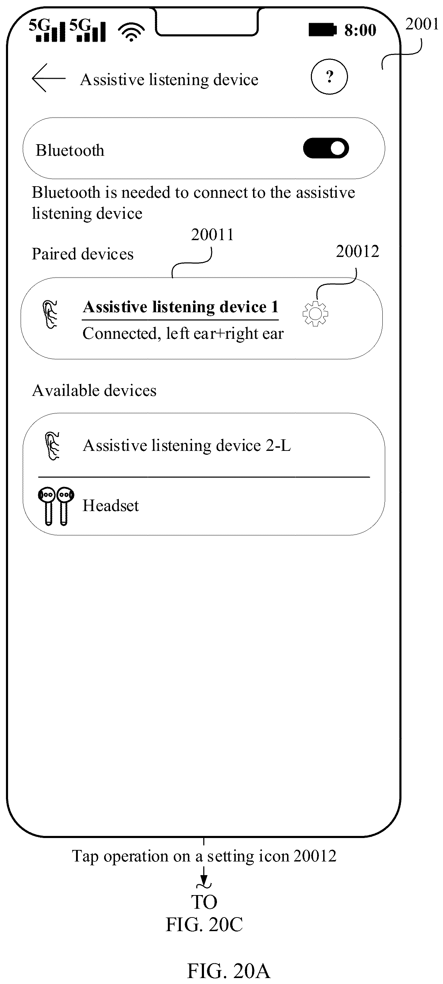

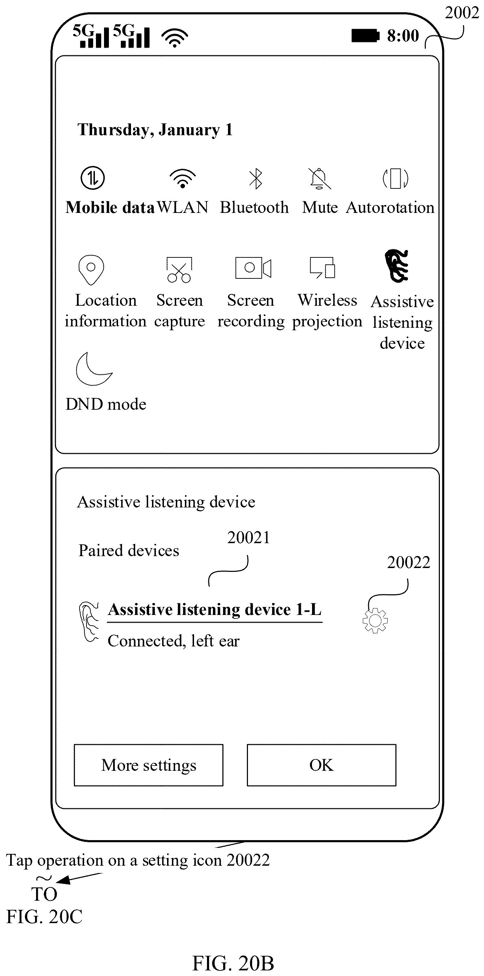

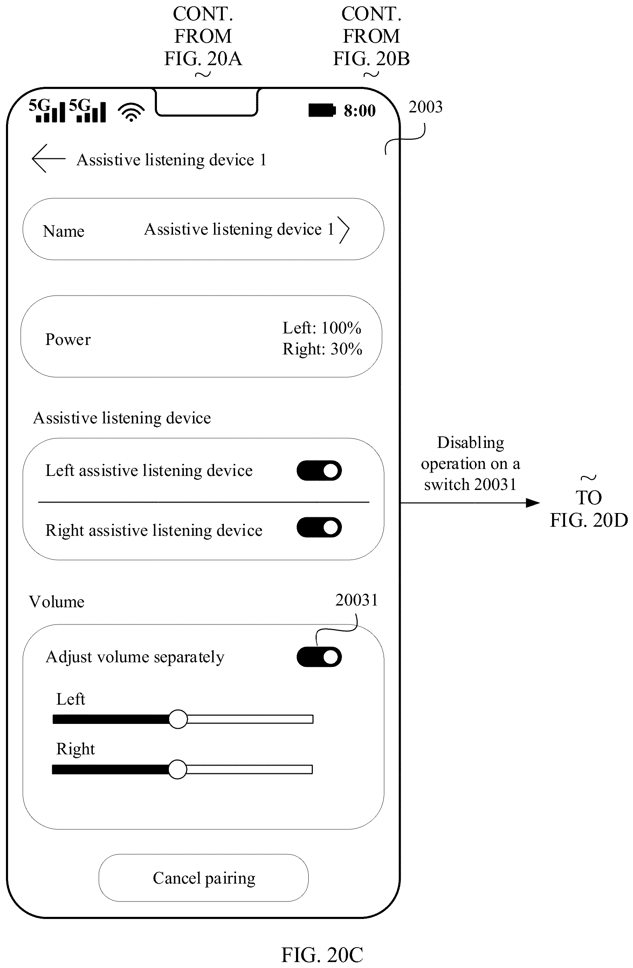

For example, after completing a connection to a pair of assistive listening devices on the assistive listening device management interface, the mobile phone may display an interface 2001 shown in FIG. 20A. The interface 2001 is an assistive listening device management interface. "Connected, left ear+right ear" displayed below an assistive listening device 1 in a paired list 20011 on the interface 2001 indicates that a connection between the assistive listening device 1 and the mobile phone has been established. Alternatively, after completing the connection to the pair of assistive listening devices through a quick entry in the control center, the mobile phone may display an interface 2002 shown in FIG. 20B. "Connected, left ear+right ear" displayed below an assistive listening device 1 in a paired list 20021 on the interface 2002 indicates that a connection between the assistive listening device 1 and the mobile phone has been established. The mobile phone may display the interface 2003 shown in FIG. 20C in response to a tap operation performed by the user on a setting icon 20012 on the right side of the assistive listening device 1 on the interface 2001 or on a setting icon 20022 on the right side of the assistive listening device 1 on the interface 2002. The interface 2003 is a connected assistive listening device (namely, an assistive listening device 1) setting interface. The interface 2003 includes volume adjustment bars of two assistive listening devices. The mobile phone may adjust a volume of a corresponding assistive listening device in response to an operation performed by the user on a volume adjustment bar of any assistive listening device.

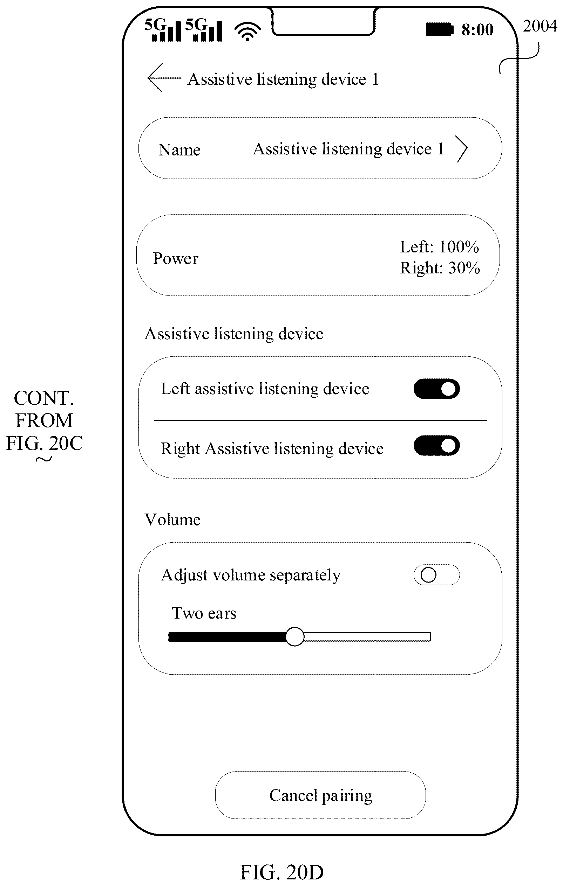

In the foregoing interface 2003 shown in FIG. 20C, the mobile phone may receive a separate volume adjustment operation performed by the user on each assistive listening device. Certainly, the mobile phone may alternatively receive a volume adjustment operation performed by the user on a pair of assistive listening devices to simultaneously adjust volumes of the pair of assistive listening devices. For example, the interface 2003 shown in FIG. 20C includes a switch 20031 for separate volume adjusting. The mobile phone may display an interface 2004 shown in FIG. 20D in response to a disabling operation performed by the user on the switch 20031 for separate volume adjusting on the interface 2003. The interface 2004 includes only one volume adjustment bar. The mobile phone may simultaneously adjust volumes of two assistive listening devices in response to an operation performed by the user on the volume adjustment bar on the interface 2004.

On the connected assistive listening device setting interface, the mobile phone may further disconnect a connection to the assistive listening device.

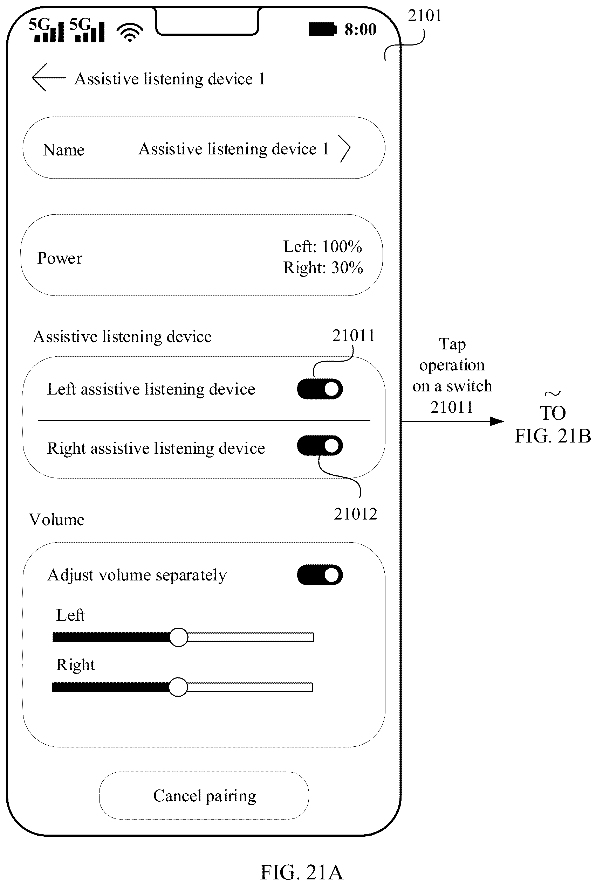

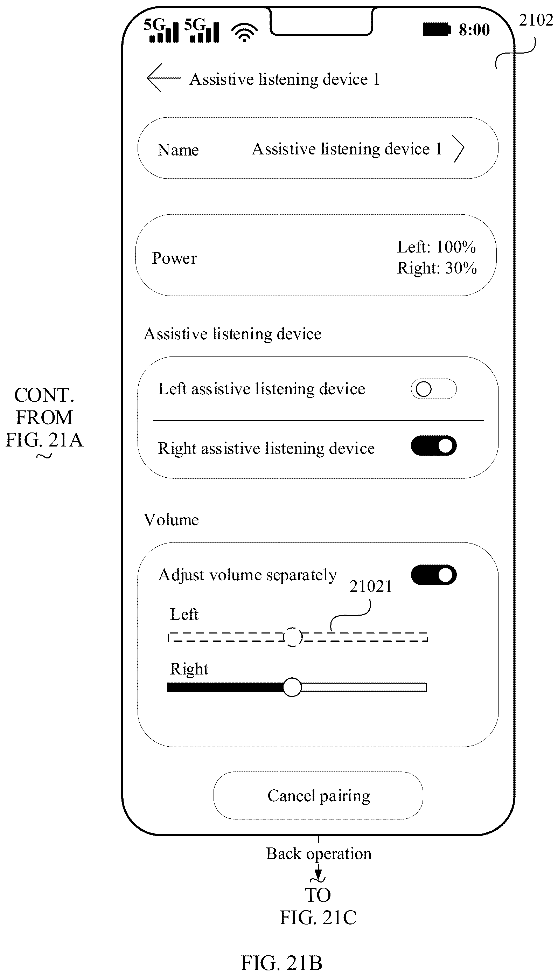

For example, the mobile phone may display an interface 2101 shown in FIG. 21A, and the interface 2101 is a connected device setting interface. The interface 2101 includes a switch of a connected assistive listening devices, for example, a switch 21011 of a left assistive listening device and a switch 21012 of a right assistive listening device in a pair of assistive listening devices. The mobile phone may disconnect a connection to the left assistive listening device in response to a disabling operation performed by the user on the switch 21011 of the left assistive listening device. After the connection is disconnected, the mobile phone may display an interface 2102 shown in FIG. 21B. The interface 2102 is a connected assistive listening device setting interface. A volume adjustment bar 21021 of the left assistive listening device on the interface 2102 is not operable. In this case, a volume of the disconnected left assistive listening device cannot be adjusted. In addition, the switch 21022 of the left assistive listening device on the interface 2102 is in a disabled state to indicate that a connection to the left assistive listening device has been disconnected.

Further, after the assistive listening device is disconnected on the connected assistive listening device setting interface, the mobile phone may display the assistive listening device management interface in response to a back operation performed by the user on the connected assistive listening device setting interface. In this case, that the mobile phone establishes a connection to the disconnected assistive listening device is no longer prompted on the assistive listening device management interface.

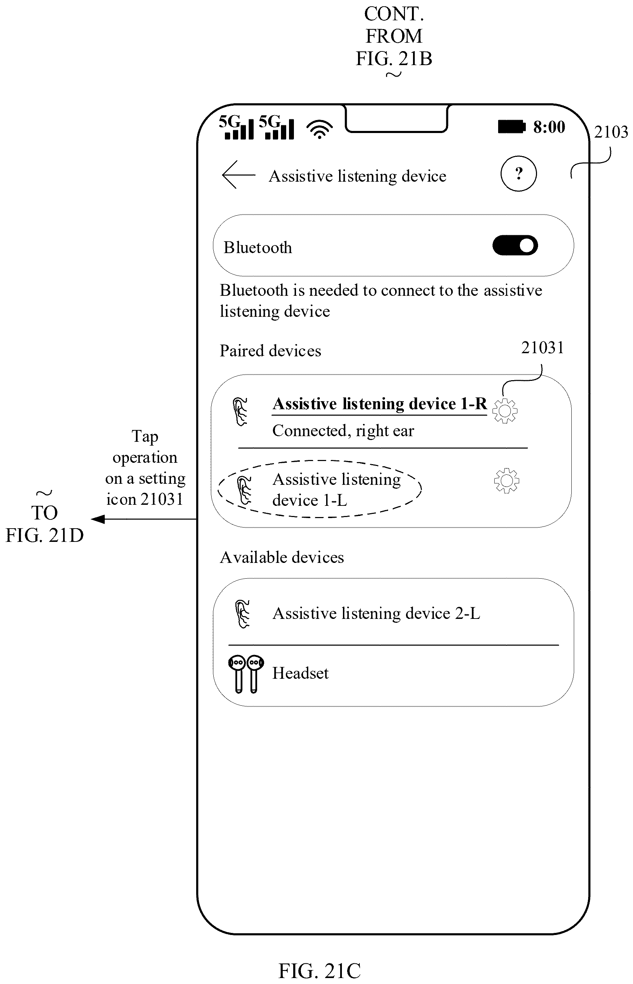

The examples in FIG. 20A to FIG. 20D and FIG. 21A to FIG. 21D are still used. The mobile phone may display an interface 2103 shown in FIG. 21C in response to a tap operation performed by the user on a back button 21021 on the interface 2102 shown in FIG. 21B. Different from the foregoing interface 2001, the interface 2103 only prompts "Connected" below the assistive listening device 1-R, but does not prompt "Connected" below the disconnected assistive listening device 1-L.

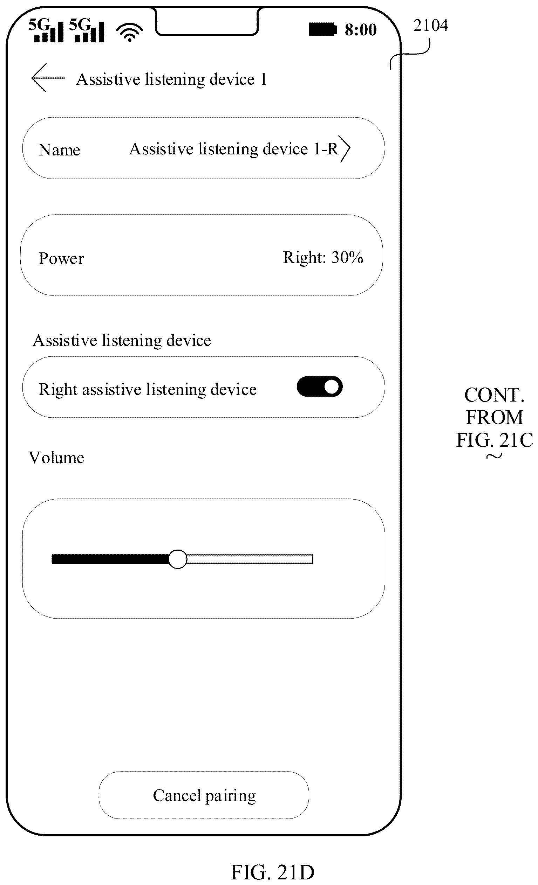

It should be understood that when only one assistive listening device is connected to the mobile phone, in response to a setting operation performed by the user on the connected assistive listening device, the connected assistive listening device setting interface displayed on the mobile phone includes information, for example, power, a volume adjustment bar, or a switch, of only one assistive listening device. For example, when the mobile phone only establishes a connection to the assistive listening device 1-R, the mobile phone may display the interface 2103 shown in FIG. 21C. The mobile phone may display an interface 2104 shown in FIG. 21D in response to a tap operation performed by the user on a setting icon 21031 on the right side of the assistive listening device 1-R on the interface 2103. The interface 2104 is a connected assistive listening device setting interface. However, different from the interface 2101, the interface 2104 includes only power, a volume adjustment bar, and a switch of the assistive listening device 1-R.

After establishing a connection to an assistive listening device, the mobile phone may adjust a volume of the assistive listening device on the connected assistive listening device setting interface. Therefore, after establishing the connection to the assistive listening device, the mobile phone may control an audio equalization control (a third control) to be not operable to avoid conflicts.

The audio equalization control is used to conditionally adjust balance between a left sound channel and a right sound channel of the assistive listening device or a headset.

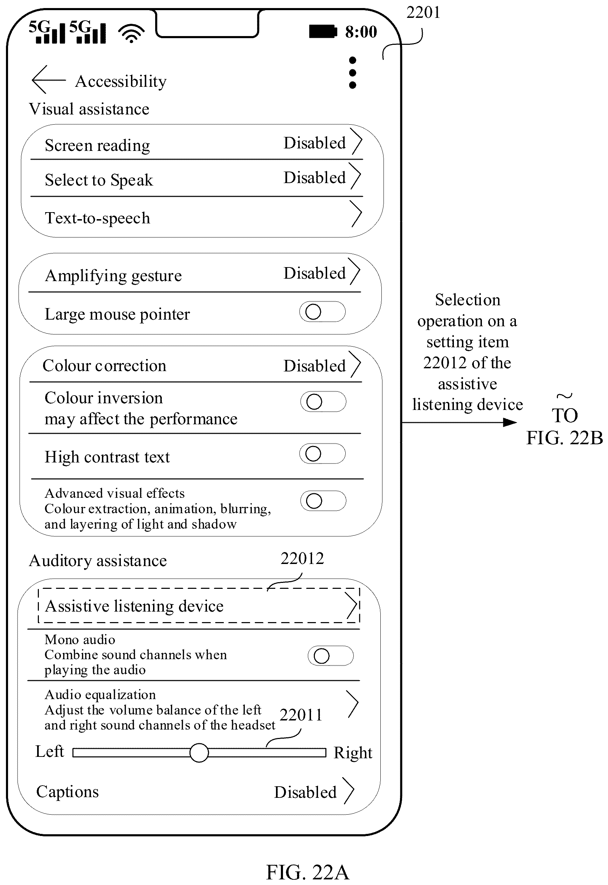

For example, when the mobile phone does not establish a connection to an assistive listening device, the mobile phone may display an interface 2201 shown in FIG. 22A, and the interface 2201 is an accessibility setting item management interface in the settings of the mobile phone. The interface 2201 includes an audio equalization control 22011. The mobile phone may adjust balance between a volume of a left sound channel and a volume of a right sound channel in response to an adjustment operation performed by the user on the audio equalization control 22011. For example, if an operation button 22012 in the audio equalization control 22011 slides from the left end to the right end, the volume of the left sound channel gradually decreases while the volume of the right sound channel gradually increases.

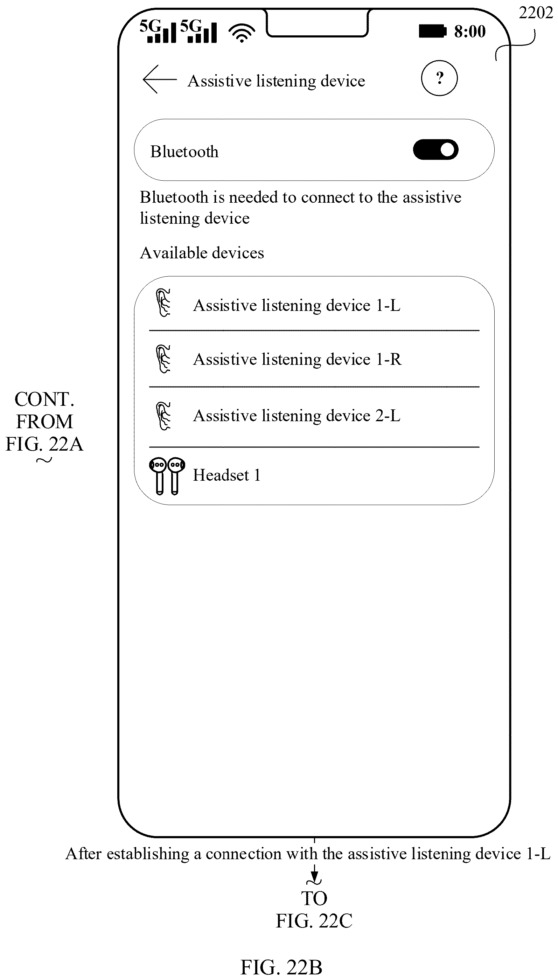

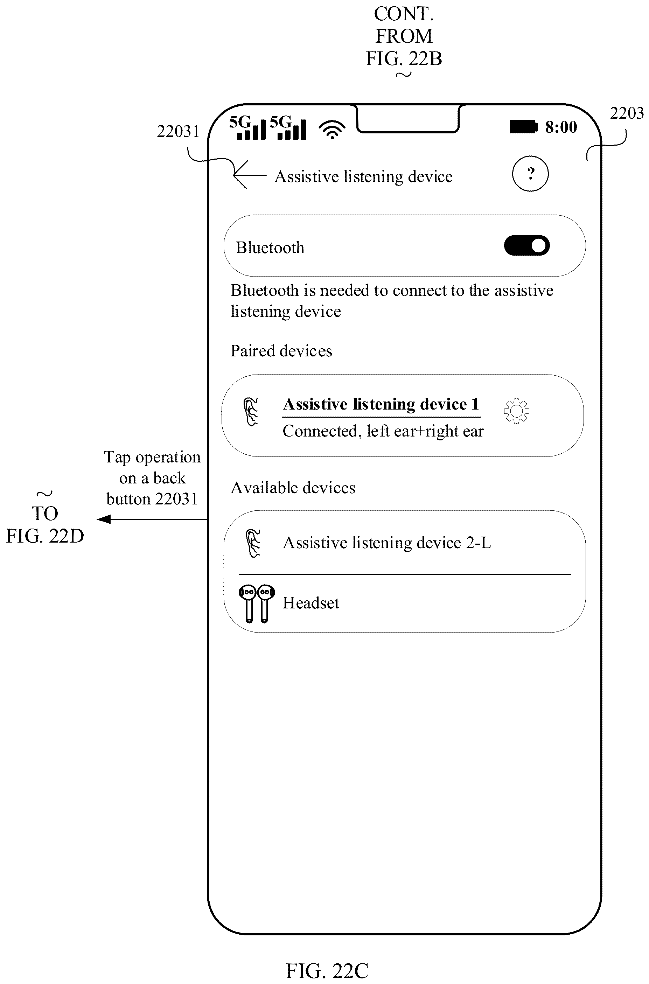

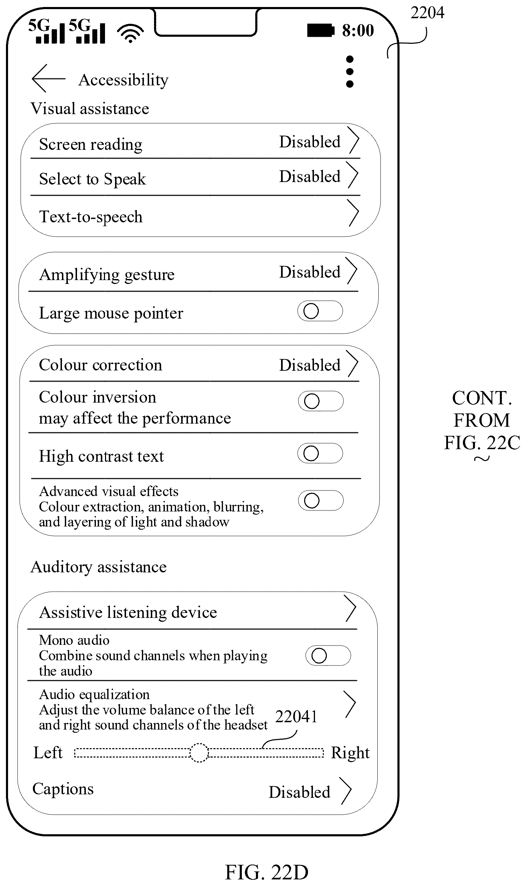

In addition, the interface 2201 further includes an assistive listening device setting item 22012. The mobile phone may display an interface 2202 shown in FIG. 22B in response to a selection operation performed by the user on the assistive listening device setting item 22012. The interface 2202 is an assistive listening device management interface. The mobile phone has not yet established a connection to an assistive listening device in this case. Accordingly, an assistive listening device that has established a connection to the mobile phone is not prompted on the interface 2202. Then, after the mobile phone establishes a connection to the assistive listening device 1-L on the assistive listening device management interface, the mobile phone may display an interface 2203 shown in FIG. 22C, and the interface 2203 is also an assistive listening device management interface. "Connected" is prompted below the assistive listening device 1-L in the interface 2203 to indicate that the mobile phone has established the connection to the assistive listening device 1-L. When the interface 2203 is displayed, that is, when the mobile phone establishes a connection to the assistive listening device, the mobile phone may display an interface 2204 shown in FIG. 22D in response to a tap operation performed by the user on a return button 22031 on the interface 2203. The interface 2204 is an accessibility setting item management interface. However, different from the interface 2201, on the interface 2204, the audio equalization control 22041 is not operable (as shown by the dashed line in the figure). To be specific, after the mobile phone establishes a connection to an assistive listening device, the audio equalization control is not operable to prevent the user from adjusting a volume of the assistive listening device through the audio equalization control.

In the foregoing example shown in FIG. 22A to FIG. 22D, the audio equalization control is set on the accessibility setting item management interface. However, during actual implementation, this is not limited thereto.

An embodiment of this application further provides a chip system. The chip system includes at least one processor and at least one interface circuit. The processor and the interface circuit may be interconnected through a line. For example, the interface circuit may be configured to receive a signal from another apparatus (for example, a memory of a terminal). For another example, the interface circuit may be configured to transmit a signal to another apparatus (for example, a processor). For example, the interface circuit may read instructions stored in the memory and send the instructions to the processor. When the instructions are executed by the processor, the terminal is enabled to perform the steps in the foregoing embodiments. Certainly, the chip system may further include another discrete device. This is not specifically limited in embodiments of this application.

This embodiment further provides a computer-readable storage medium. The computer-readable storage medium stores computer instructions. When the computer instructions are run on a terminal, the terminal is enabled to perform the functions or steps in the foregoing method embodiments.

This embodiment further provides a computer program product. When the computer program product runs on a computer, the computer is enabled to perform the functions or steps in the foregoing method embodiments.

In addition, an embodiment of this application further provides an apparatus. The apparatus may specifically be a chip, a component, or a module. The apparatus may include a processor and a memory that are connected. The memory is configured to store computer-executable instructions, and when the apparatus runs, the processor may execute the computer-executable instructions stored in the memory, so that the chip performs the functions or steps in the foregoing method embodiments.

The chip system, the computer-readable storage medium, the computer program product, or the apparatus in this embodiment may be configured to perform the corresponding method provided above. Therefore, for beneficial effects that can be achieved, refer to the beneficial effects of the corresponding method provided above. Details are not described herein again.

Based on the foregoing descriptions of the implementations, persons skilled in the art may clearly understand that for a purpose of convenient and brief descriptions, division of the foregoing functional modules is merely used as an example for description. During actual application, the foregoing functions can be allocated to different functional modules for implementation according to a requirement, that is, an inner structure of an apparatus is divided into different functional modules, to implement all or some of the functions described above.

In several embodiments provided in this application, it should be understood that the disclosed apparatus and method may be implemented in other manners. For example, the foregoing described apparatus embodiment is merely an example. For example, division of the modules or units is merely logical function division and may be other division during actual implementation. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between apparatuses or units may be implemented in electronic, mechanical, or another form.

The units described as separate parts may or may not be physically separate, and parts displayed as units may be one or more physical units, that is, may be located in one place, or may be distributed in a plurality of different places. Some or all of the units may be selected according to actual requirements to achieve the objectives of the solutions of this embodiment.

In addition, functional units in embodiments of this application may be integrated into one processing unit, each of the units may exist alone physically, or two or more units may be integrated into one unit. The foregoing integrated unit may be implemented in a form of hardware, or may be implemented in a form of a software functional unit.

When the integrated unit is implemented in a form of a software functional unit and sold or used as an independent product, the integrated unit may be stored in a readable storage medium. Based on such an understanding, the technical solutions of embodiments of this application essentially, or the part contributing to the prior art, or all or some of the technical solutions may be implemented in a form of a software product. The software product is stored in a storage medium and includes several instructions for instructing a device (which may be a single-chip microcomputer, a chip, or the like) or a processor (processor) to perform all or some of the steps of the methods in embodiments of this application. The foregoing storage medium includes any medium that can store program codes, for example, a USB flash drive, a removable hard disk, a read-only memory (Read-Only Memory, ROM), a random access memory (Random Access Memory, RAM), a magnetic disk, or an optical disc.

Finally, it should be noted that the foregoing embodiments are merely intended for describing the technical solutions of this application, but not for limiting this application. Although this application is described in detail with reference to exemplary embodiments, persons of ordinary skill in the art should understand that they may make modifications or equivalent replacements to the technical solutions of this application, without departing from the spirit and scope of the technical solutions of this application.

## Claims

1. An assistive listening device management method, applied to an electronic device that supports Bluetooth, comprising:
when Bluetooth is enabled, displaying, by the electronic device, a first interface in response to a first operation on a first control in a setting application of the electronic device, wherein a first Bluetooth device and a second Bluetooth device that are scanned through Bluetooth are displayed on the first interface, the first Bluetooth device is an assistive listening device or a headset, and the second Bluetooth device is a Bluetooth device other than an assistive listening device or a headset; and
when Bluetooth is enabled, displaying, by the electronic device, a second interface in response to a second operation on a second control in an auxiliary function interface of the electronic device, wherein a third Bluetooth device scanned through Bluetooth is displayed on the second interface, the third Bluetooth device is an assistive listening device or a headset, and the second interface does not comprise a Bluetooth device other than an assistive listening device or a headset.

2. The method according to claim 1, wherein when both the first Bluetooth device and the third Bluetooth device are assistive listening devices,
the first interface comprises a device name of the first Bluetooth device, first information of the first Bluetooth device, and a first icon of the first Bluetooth device, wherein the first information is used to indicate that the first Bluetooth device is a device for a left ear or a device for a right ear, and the first icon is an assistive listening device icon;
the first interface further comprises a name of the second Bluetooth device and a second icon of the second Bluetooth device, wherein the second icon is an icon corresponding to a device type of the second Bluetooth device; and
the second interface comprises a device name of the third Bluetooth device, third information of the third Bluetooth device, and a third icon of the third Bluetooth device, wherein the third information is used to indicate that the third Bluetooth device is a device for a left ear or a device for a right ear, and the third icon is an assistive listening device icon.

3. The method according to claim 1 or 2, wherein the first control is a Bluetooth option on a home interface of the setting application of the electronic device.

4. The method according to any one of claims 1 to 3, wherein the second control is an assistive listening device option on the auxiliary function interface of the electronic device.

5. The method according to any one of claims 1 to 3, wherein the method further comprises:
displaying, by the electronic device, a control center interface, wherein the control center interface comprises a first entry of an assistive listening device; and
displaying, by the electronic device, a third interface in response to a third operation on the first entry of the assistive listening device, wherein
the third interface comprises an assistive listening device and/or a headset, and the third interface does not comprise a Bluetooth device other than an assistive listening device or a headset.

6. The method according to claim 5, wherein the third interface displays the assistive listening device and/or the headset through a card that pops up on the control center interface.

7. The method according to claim 5 or 6, wherein the control center interface further comprises a second entry of Bluetooth; and
after the displaying, by the electronic device, a control center interface, the method further comprises:
disabling, by the electronic device, Bluetooth in response to a fourth operation on the second entry of Bluetooth.

8. The method according to any one of claims 1 to 3, wherein the method further comprises:
displaying, by the electronic device, a control center interface, wherein the control center interface comprises a third entry of Bluetooth;
displaying, by the electronic device, a fourth interface in response to a fifth operation on the third entry of Bluetooth, wherein the fourth interface comprises a fourth entry of an assistive listening device; and
displaying, by the electronic device, a fifth interface in response to a selection operation on the fourth entry of the assistive listening device, wherein the fifth interface comprises the assistive listening device and/or the headset, and the fifth interface does not comprise the Bluetooth device other than the assistive listening device or the headset.

9. The method according to claim 8, wherein the fourth interface further comprises a fifth entry of Bluetooth; and
displaying, by the electronic device, the first interface in response to a selection operation on the fifth entry of Bluetooth.

10. The method according to claim 8 or 9, wherein after the displaying, by the electronic device, a control center interface, the method further comprises:
disabling, by the electronic device, Bluetooth in response to a sixth operation on the third entry of Bluetooth.

11. The method according to any one of claims 5 to 7, wherein when the electronic device is not successfully paired with the assistive listening device and the headset, the Bluetooth devices on the third interface are all unpaired.

12. The method according to claim 11, wherein when the electronic device is successfully paired with a plurality of assistive listening devices and/or a plurality of headsets, but is not successfully connected to any Bluetooth device among the plurality of assistive listening devices and/or headsets, the third interface comprises the plurality of assistive listening devices and/or headsets.

13. The method according to claim 11 or 12, wherein the method further comprises:
when the electronic device is successfully paired with an assistive listening device or a headset, establishing, by the electronic device, a connection to the assistive listening device or the headset in response to the third operation on the first entry of the assistive listening device.

14. The method according to any one of claims 1 to 13, wherein the electronic device is not successfully paired with the third Bluetooth device; and
after the displaying, by the electronic device, a second interface, the method further comprises:
in response to a pairing operation on the third Bluetooth device, performing, by the electronic device, pairing with the third Bluetooth device and establishing a connection to the third Bluetooth device.

15. The method according to claim 14, wherein the second interface further comprises a fourth Bluetooth device that is scanned by the electronic device but is not successfully paired with the electronic device, and the fourth Bluetooth device and the third Bluetooth device are a pair of assistive listening devices; and
after the performing, by the electronic device, pairing with the third Bluetooth device and establishing a connection to the third Bluetooth device, the method further comprises:
displaying, by the electronic device, a first prompt, wherein the first prompt is used to prompt for pairing with the fourth Bluetooth device; and
in response to a pairing confirmation operation performed by a user on the first prompt, performing, by the electronic device, pairing with the fourth Bluetooth device and establishing a connection to the fourth Bluetooth device.

16. The method according to claim 14 or 15, wherein after the electronic device is paired with and connected to the third Bluetooth device, a third control in the electronic device is not operable, wherein
the third control is configured to trigger the electronic device to adjust sound equalization of left and right sound channels.

17. The method according to any one of claims 1 to 16, wherein the first interface comprises a first card and a second card, the first card comprises the first Bluetooth device, and the second card comprises the second Bluetooth device.

18. The method according to claim 17, wherein the first card is located above the second card on the first interface.

19. An electronic device, wherein the electronic device comprises a display, a memory, and a processor, the display and the memory are coupled to the processor, the memory stores a computer program code, the computer program code comprises computer instructions, and when the computer instructions are executed by the processor, the electronic device is enabled to perform the method according to any one of claims 1 to 18.

20. A computer-readable storage medium, comprising computer instructions, wherein when the computer instructions are run on an electronic device, the electronic device is enabled to perform the method according to any one of claims 1 to 18.
